# EUROPEAN PATENT SPECIFICATION

(11) **EP 1 496 097 B1**
(45) Date of publication and mention of the grant of the patent: **27.06.2012**
(21) Application number: 04254157.3
(22) Date of filing: 12.07.2004
(51) Int. Cl.: C09K 11/06

(54) **Manufacturing method for luminous organic compound**
Herstellungsverfahren für lumineszierende organische Verbindung
Procédé de fabrication de composé organique luminescent

(30) Priority: 11.07.2003 JP 2003273761
(43) Date of publication of application: 12.01.2005
(73) Proprietor: ORIENT CHEMICAL INDUSTRIES, LTD., Osaka-shi, Osaka 535-0022 (JP)
(72) Inventor: Yamasaki, Yasuhiro Orient Chemical Industries Ltd., Neyagawa-shi, Osaka 572-8581 (JP); Imanishi, Keishi, Orient Chemical Industries, Ltd, Neyagawa-shi, Osaka 572-8581 (JP)
(74) Representative: Bassett, Richard Simon

(56) References cited:
- DATABASE WPI Section Ch, Week 199954 Derwent Publications Ltd., London, GB; Class A82, AN 1999-629484 XP002301530 -& JP 11 279474 A (MITSUI CHEM INC) 12 October 1999 (1999-10-12)
- DATABASE WPI Section Ch, Week 198907 Derwent Publications Ltd., London, GB; Class A60, AN 1989-050206 XP002301531 -& JP 01 006085 A (MITSUI TOATSU CHEM INC) 10 January 1989 (1989-01-10)
- DATABASE WPI Section Ch, Week 198910 Derwent Publications Ltd., London, GB; Class A18, AN 1989-073424 XP002301532 -& JP 01 026583 A (MITSUI TOATSU CHEM INC) 27 January 1989 (1989-01-27)
- DATABASE WPI Section Ch, Week 199649 Derwent Publications Ltd., London, GB; Class E12, AN 1996-493561 XP002301533 -& JP 08 253715 A (TOYO INK MFG CO LTD) 1 October 1996 (1996-10-01)
- DATABASE WPI Section Ch, Week 198947 Derwent Publications Ltd., London, GB; Class E19, AN 1989-344262 XP002301534 -& JP 01 256584 A (IDEMITSU KOSAN CO LTD) 13 October 1989 (1989-10-13)

## Description

This invention relates to a manufacturing method of a luminous organic compound which is used for a manufacturing material of a security ink, an electrical or optical device.

A security ink, which is used for printing characters of secret information needed to conceal such as lot numbers of commercial product and confidential matters and makes the characters visible under just irradiation of unusual light such as ultraviolet rays, includes a luminous organic compound.

The luminous organic compound has properties of making the printed characters invisible under visible radiation, and of making the printed characters visible with luminescence under the irradiation of ultraviolet rays by photoluminescence(PL) phenomenon occurring excitation and fluorescence luminescence. The ink including the luminous organic compound is disclosed in Japanese Provisional Publication Nos. 64-6085, 64-26583, 8-253715 and 11-279474.

For use as the security ink, the luminous organic compound is desired to improve more solubility into the ink in order to print easily, fastness or light-resistance in order not to damage the printed characters, luminous efficacy and brightness in order to make the printed characters luminous vividly.

Moreover the luminous organic compound is used as the manufacturing material which is included in a luminous layer of the electrical or optical device such as an organic electroluminescence elemental device or an luminescent color convertible layer. The luminous organic compound, which is included in the luminous layer of the organic electroluminescence elemental device, has spontaneous luminescence property by electroluminescence(EL) phenomenon occurring excitation when direct current voltage is impressed.

The organic electroluminescence elemental devices having luminous layer which includes the luminous organic compound are disclosed in Japanese Provisional Publication 11-255700, 2000-30869 and 10-158639.

For use as the organic electroluminescence elemental device, the luminous organic compound is desired to improve more mechanical durability, chemical durability and luminescent ability.

It is an object of the present invention to provide a manufacturing method of a luminous organic compound which has sufficient solubility into the ink, excellent fastness and light-resistance, superior luminous efficacy, high brightness, and excellent mechanical durability, chemical durability, and luminescent ability.

A luminous organic compound of the present invention developed for accomplishing the foregoing object, is represented by following formula (1) 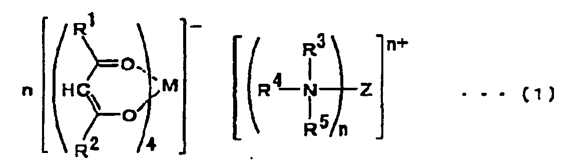 in the formula (I), n, R¹, R², M, R³, R⁴, R⁵ and Z are as defined in Claim 1.

It is preferable that said R¹- of the formula (1) is the aryl group selected from 2-naphthyl group and phenyl group, or the heterocyclic group selected from 2-thienyl group and 2-furanyl group. It is preferable that said M is lanthanoid metal especially europium, terbium; or IIIb group metal especially aluminum, or IIIa group metal. It is preferable that said -Z of the formula (1) is the covalent bonding group having at least one selected from the group consisting of an alkylene group, an alkenylene group, an alkynylene group, an arylene group, heteroarylene group and a silicon-contained group, and being to have substitutional groups.

A manufacturing method of the luminous organic compound represented by the formula (1) of the present invention, comprises; a first step for reacting 1,3-butanedione derivative represented by following formula (2) 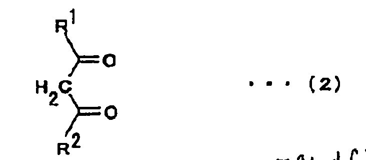 in the formula (2), R¹- and R²- are as defined in Claim 1, and a metallic compound having trivalent metal M, to prepare a metal complex intermediate represented by following formula (3) 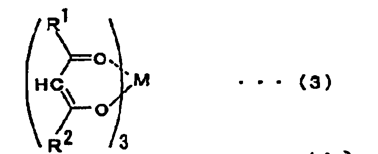 in the formula (3), R¹-, R²- and M are as defined in Claim 1,
a second step for reacting the metal complex intermediate, the same or another 1,3-butanedione derivative represented by the formula (2) and a quaternary ammonium compound having plural ammonium groups represented hy following formula (4) 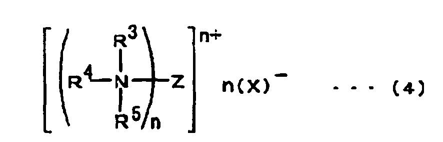 in the formula (4), R³-, R⁴-, R⁵-, -Z and n are as defined in Claim 1, (X)⁻ is a counter ion.

An ink composition of the present invention comprises the above-mertioned luminous organic compound. The composition has sufficient solubility into the ink, excellent fastness and light-resistance, superior luminous efficacy, high brightness.

An organic electroluminescence elemental device of the present invention has a luminous layer which comprises the above-mentioned luminous organic compound. The elemental device has excellent mechanical durability, chemical durability and luminescent ability.

As for the effect, the luminous organic compound of the invention has sufficient solubility into the ink, excellent fastness and light-resistance, superior luminous efficacy and high brightness, excellent mechanical durability, chemical durability and luminescent ability. The luminous organic compound gives the strong luminescent color within visible region, when ultraviolet rays are irradiated to excite.

According to the manufacturing method of the invention, the luminous organic compound is simply manufactured at high purity and yield. The ink composition comprising the luminous organic compound is used for recording secret information needed to conceal, in order to protect confidential matter and prevent from falsifying or copying. When lot numbers or codes of commercial products are printed with concealment by the ink composition, it is useful for tracing of the products in distribution channel. Moreover, it is useful for marking of documents or various containers in office, printing with concealment of bar codes and so on, preparing printed matters which have security function.

The secret information printed by the ink composition has no possibility of altering, falsifying or copying because of invisibility under visible radiation. It is not damaged because of the excellent fastness and durability.

Moreover, the organic electroluminescence elemental device having the luminous layer which comprises the luminous organic compound gives the luminescence of high brightness.
Fig. 1 is a chart of Nuclear Magnetic Resonance (NMR) spectra of the luminous organic compound 1 manufactured by this invention.
Fig. 2 is a chart of NMR spectra of the luminous organic compound 2 manufuctured by this invention.
Fig. 3 is a chart of NMR spectra of the luminous organic compound 3 manufactured by this invention.
Fig. 4 is a chart of NMR spectra of the luminous organic compound 4 manufactured by this invention.
Fig. 5 is a chart of NMR spectra of the luminous organic compound 5 manufactured by this invention.
Fig. 6 is a chart of NMR spectra of the luminous organic compound 6 manufactured by this invention.
Fig. 7 is a chart of NMR spectra of the luminous organic compound 7 manufactured by this invention.
Fig. 8 is a chart of NMR spectra of the luminous organic compound 8 manufactured by this invention.
Fig. 9 is a chart of NMR spectra of the luminous organic compound 9 manufactured by this invention.
Fig. 10 is a chart of NMR spectra of the luminous organic compound 11 manufactured by this invention.
Fig. 11 is a chart of NMR spectra of the luminous organic compound 1 manufactured which does not apply this invention.
Fig. 12 is a chart of NMR spectra of the luminous organic compound 2 manufactured which does not apply this invention.
Fig. 13 is a chart of NMR spectra of the luminous organic compound 6 manufactured which does not apply this invention.
Fig. 14 is a chart of NMR spectra of the luminous organic compound 7 manufactured which does not apply this invention.
Fig. 15 is a chart of NMR spectra of the luminous organic compound 8 manufactured which does not apply this invention.
Fig. 16 is a chart of NMR spectra of the luminous organic compound 9 manufactured which does not apply this invention.

Hereafter, the manufacturing method of the luminous organic compound of this invention is explained in detail.

The luminous organic compound represented by above-mentioned formula (1) consists of a cation-part of an ammonium counter ion being n-valent as spacer and anion-parts of n numbers that is 2 or more of metal complex ions. The ammonium counter ion signifies the cation that n numbers of the quaternary ammonium groups bond with the covalent bonding group -Z and the n numbers are 2 or more preferably from 2 to 4. The metal complex ions signify the anions which 4 molecules of 1,3-butanedione derivatives coordinate to 1 atom of the trivalent metal M.

Examples of the trivalent metal M in the formula (1) are lanthanoid metal such as europium (Eu), terbium (Tb) and neodymium (Nd): IIIb group metal such as aluminum (Al), gallium (Ga), indium (In) and thallium(TI); IIIa group metal such as scandium(Sc) and yttrium (Y). It is preferable that metal M is europium, terbium, or aluminum.

R¹- in the formula (1) is to have the substitutional groups. Examples of R¹- are the aryl group such as 2-naphthyl group and phenyl group; the heterocyclic group such as 2-thienyl group and 2-furanyl group; the fluorine-contained alkyl group such as trifluoromethyl group; the alkyl group such as straight or branch alkyl groups having 1 to 12 carbons illustrated by methyl group, ethyl group, isopropyl group, butyl group, tert-butyl group, amyl group, hexyl group, heptyl group, octyl group, nonyl group, decyl group, undecyl group, dodecyl group; the aralkyl group such as benzyl group. Above all, it is preferable that R¹- is the aryl group such as 2-naphthyl group and phenyl group, or the heterocyclic group such as 2-thienyl group and 2-furanyl group. Examples of the substitutional group which R¹- such as the aryl group, the heterocyclic group, the aralkyl group, the fluorine-contained alkyl group and the alkyl group is having are a lower alkyl group having less than four carbon atoms such as methyl group, ethyl group, isopropyl group and butyl group; a lower alkoxyl group having less than four carbon atoms such as methoxyl group, ethoxyl group, propoxyl group and butoxyl group; an amino group; a monoalkylamino group such as methylamino group, ethylamino group and 2-hydroxyethylamino group; a dialkylamino group such as dimethylamino group and diethylamino group; an aralkyl group such as benzyl group, alpha, alpha' - dimethylbenzyl group and phenethyl group; an aryl group such as phenyl group; a halogen atom such as chlorine atom, bromine atom, fluorine atom and iodine atom; a cyano group; a nitro group; a sulfonate group; a carboxylate group; a sulfone group; a carboxyl group.

More concretely, examples of R¹- as 2-naphthyl group being to have the substitutional groups are 2-naphthyl group; 2-naphthyl group substituted by lower alkyl group such as 1-methyl-2-naphthyl group, 3-methyl-2-naphthyl group, 4-methyl-2-naphthyl group, 5-methyl-2-naphthyl group, 6-methyl-2-naphthyl group, 7-methyl-2-naphthyl group, 8-methyl-2-naphthyl group and 4-ethyl-2-naphthyl group; 2-naphthyl group substituted by lower alkoxyl group such as 1-methoxy-2-naphthyl group, 3-methoxy-2-naphthyl group, 4-methoxy-2-naphthyl group, 5-methoxy-2-naphthyl group, 6-methoxy-2-naphthyl group, 7-methoxy-2-naphthyl group, 8-methoxy-2-naphthyl group and 6-ethoxy-2-naphthyl group; 2-naphthyl group substituted by halogen atom; 2-naphthyl group substituted by alkylamino group; 2-naphthyl group substituted by phenyl group; 2-naphthyl group substituted by benzyl group; 2-naphthyl group substituted by cyano group; 2-naphthyl group substituted by nitro group; 2-naphthyl group substituted by sulfonate group; 2-naphthyl group substituted by carboxylate group; 2-naphthyl group substituted by sulfone group; 2-naphthyl group substituted by carboxyl group.

As mentioned, R¹- is given the examples of as 2-naphthyl group being to have the substitutional groups. Naturally, when R¹- is the aryl group such as phenyl group, the heterocyclic group such as 2-thienyl group and 2-furanyl group, the aralkyl group, the fluorine-contained alkyl group or the alkyl group instead of 2-naphthyl group, they may have the same of the substitutional groups of the above-mentioned 2-naphthyl group.

Examples of R²- are the fluorine-contained alkyl group having 1 to 20 carbon atoms such as perfluoroalkyl group illustrated by CₚF₂ₚ₊₁- group (wherein p is 1 to 20) which is more concretely CF₃- group, C₂F₅- group, n-C₃F₇- group or n-C₇F₁₅-group; partial-fluoroalkyl group such as CHF₂- group, CH₂F- group, CH(CF₃)₂-group;

Especially it is preferable that R²- is perfluoroalkyl group illustrated by CₚF₂ₚ₊₁- group wherein p is 1 to 10.

R³-, R⁴- and R⁵- in the formula (1) are the same or different to each other and to have the substitutional groups. Examples of R³-, R⁴- and R⁵- are the alkyl group having a straight or cyclic chain of 1 to 20 carbon atoms such as methyl group, ethyl group, propyl group, isopropyl group, butyl group, amyl group, hexyl group, cyclohexyl group, heptyl group, octyl group, nonyl group and dodecyl group; these alkyl group having substitutional groups such as a alkoxyl group and halogen atom; the aralkyl group such as benzyl group and phenethyl group; these aralkyl group having substitutional groups such as halogen atom; the aryl group such as phenyl group and tolyl group.

Z- in the formula (1) is the covalent bonding group being to have the substitutional groups. Examples of Z- are the alkylene group having 2 to 20 carbon atoms; the alkenylene group having 2 to 20 carbon atoms; the alkynylene group having 2 to 20 carbon atoms; the arylene group such as phenylene group and biphenylene group; these arylene group having substitutional groups such as a sulfone group, a carboxyl group a nitro group and a halogen atom; the heteroarylene group including a nitrogen atom or a sulfur atom; a silicon-containing group such as silanediyl group. -Z may be the group which any of the alkylene group, the alkenylene group, the alkynylene group, the arylene group, the heteroarylene group and the silicon-containing group bonds plurally.

The luminous organic compound is prepared by either of the manufacturing method through one step and two steps.

The manufacturing method through one step is as follows. 4 equivalents of 1,3-butanedione derivative and 4 equivalent of sodium hydroxide are mixed in organic solvent. 1/n equivalents of a quaternary ammonium compound having n numbers of ammonium groups and 1 equivalent of the metallic compound are reacted thereto, to obtain the luminous organic compound.

Another manufacturing method through one step is as follows. 1 equivalent of the metallic compound, 4 equivalents of 1,3-butanedione derivative and 4 equivalent of sodium hydroxide are mixed in organic solvent. 1/n equivalents of a quaternary ammonium compound having n numbers of ammonium groups are reacted thereto, to obtain the luminous organic compound.

The method through two steps is rather preferable than the method through one step, because both of purity and yield of the luminous organic compound are high.

For example, the manufacturing method through two steps comprises the first step represented by following reaction formula [i], and the second step represented by [ii]. In the first step, 1 equivalents of the metallic compound such as europium chloride is reacted to 3 equivalents of the 1,3-butanedione derivative (2) to prepare the metal complex intermediate (3) which 3 molecules of the 1,3-butanedione derivative are coordinated to 1 atom of metal M: Eu. In the second step, 1 equivalent of the quaternary ammonium compound (4) having n numbers of ammonium groups is reacted to n equivalents of the same or different 1,3-butanedione derivative (2) and n equivalents of the metal complex intermediate (3). Then the luminous organic compound (1) is obtained. 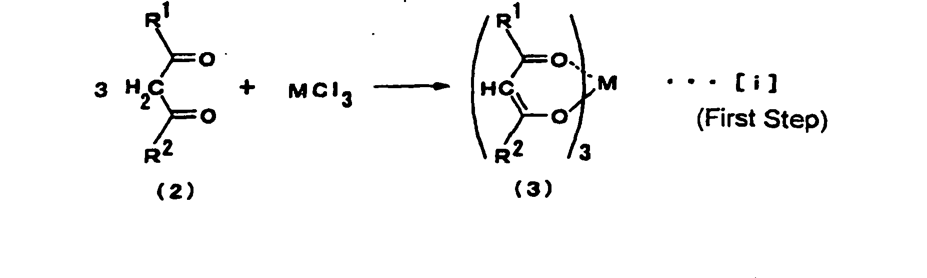 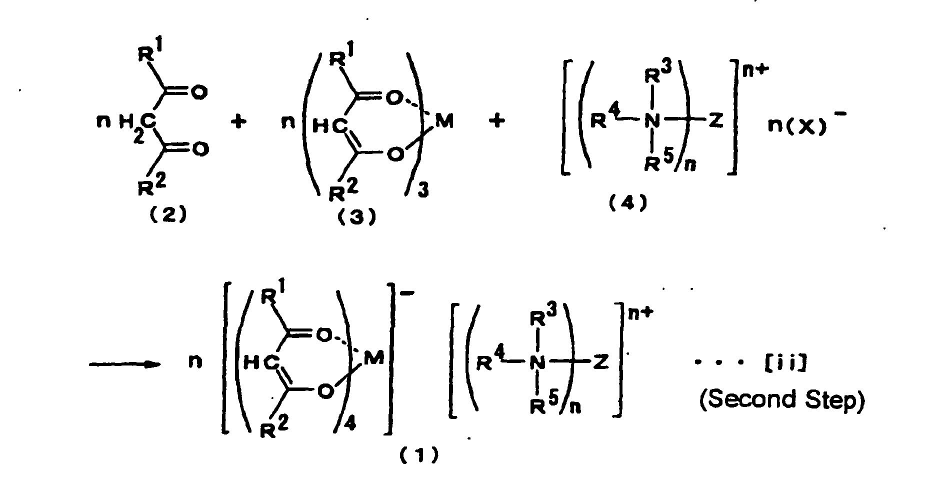 1,3-butanedione derivative as material represented by above formula (2) may be prepared or commercially available. Examples thereof are following butanedione derivative 1 to 5.

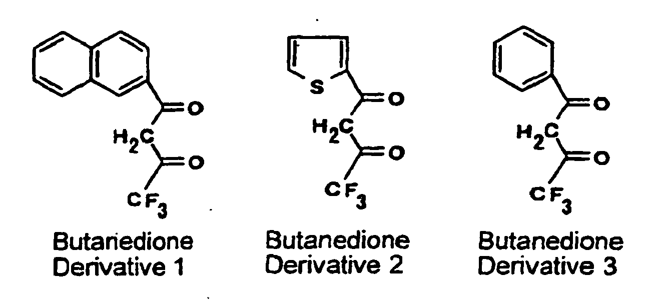

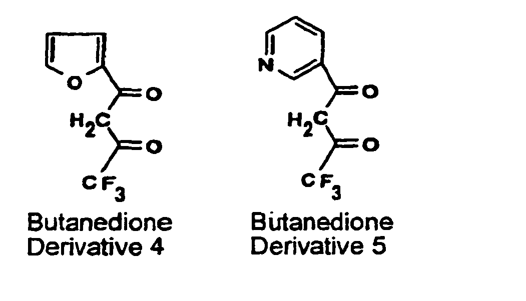

Examples of the intermediate represented by above formula (3), which 3 molecules of the 1,3-butanedione derivative are coordinated to 1 atom of metal M originated from the metallic compound, are following metal complex intermediate 1 to 7.

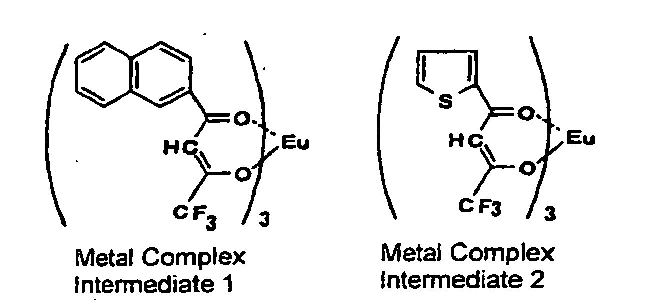

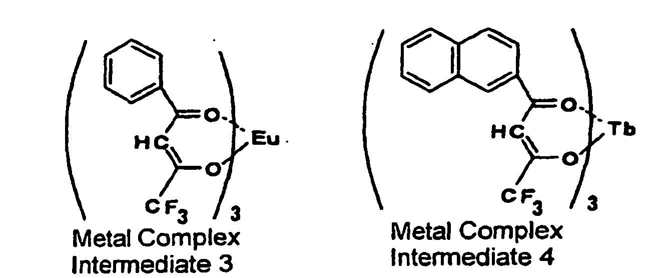

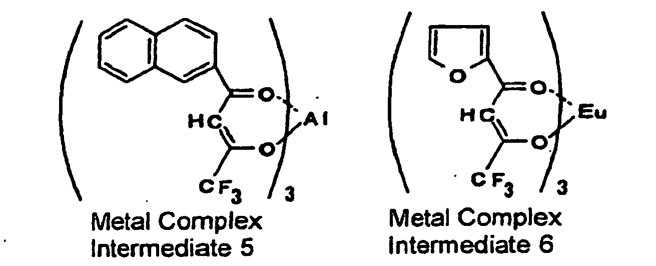

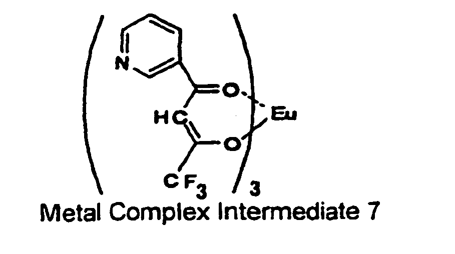

For example, the quaternary ammonium compound having plural ammonium groups represented by above formula (4) is prepared by reaction represented by following reaction formula [iii]. N-alkylation of an amine compound (5) of material such as diamine wherein n is 2 and triamine wherein n is 3, is carried out by an alkylating agent such as an alkyl halide R⁵X illustrated by iodomethane CH₃I in alcohol solvent such as ethanol, to obtain the quaternary ammonium compound (4) having plural ammonium groups. The quaternary ammonium compound (4) is polynuclear quaternary ammonium compound: multi-ammonium salt having plural quaternary ammonium groups that forms salt with the complex ion. The quaternary ammonium compound fulfills the spacer for the luminous organic compound.

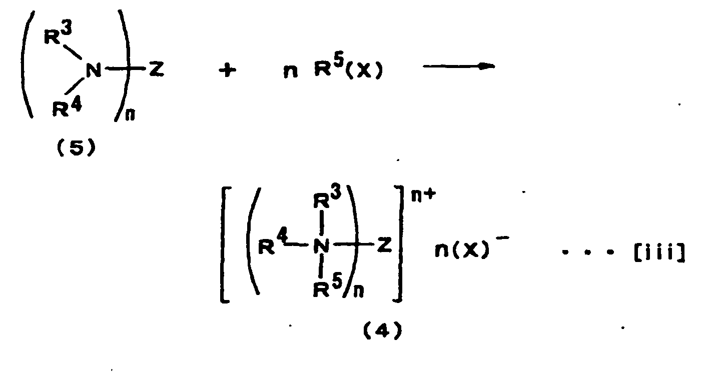

Examples of the covalent bonding group -Z, which is divalent, trivalent or tetravalent, are as follows.

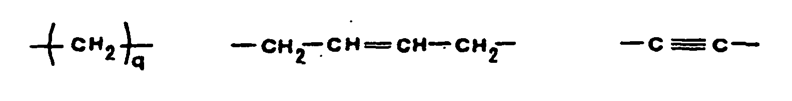

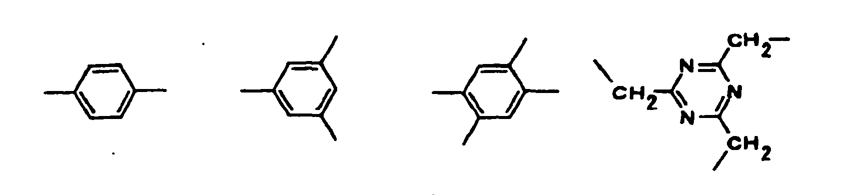

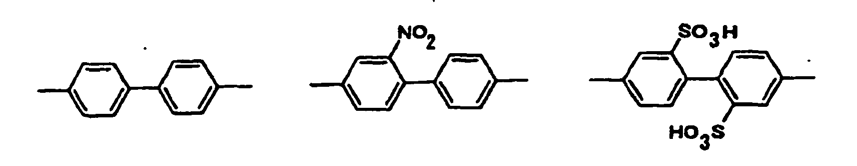

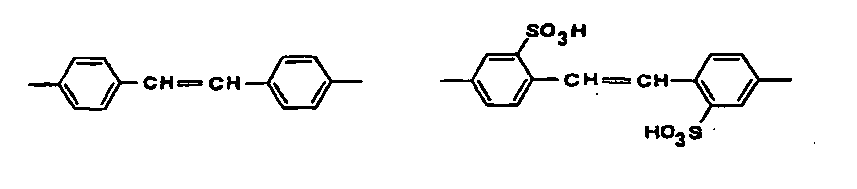

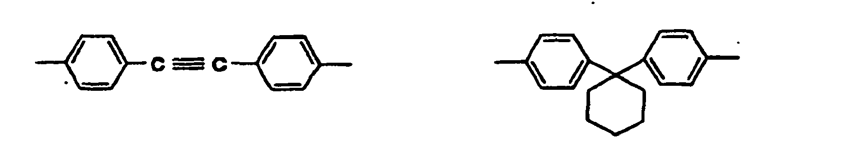

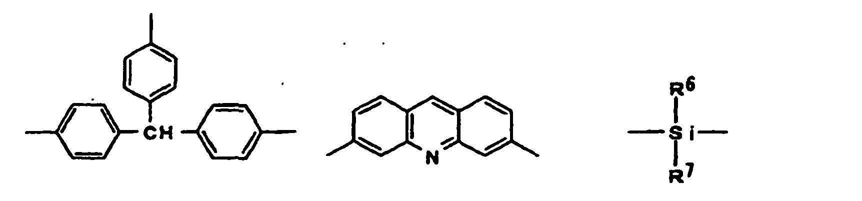

Incidentally q is 2 to 6. -R⁶ and -R⁷ are a hydrogen atom or an alkyl group.

Examples of the quaternary ammonium compound represented by above formula (4) are following ammonium compound (I) to (III).

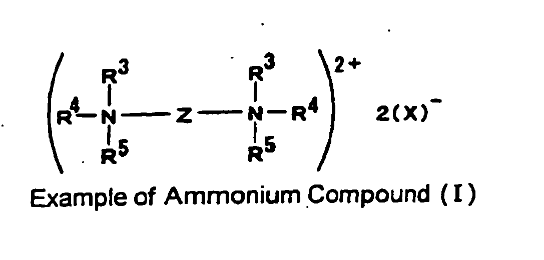

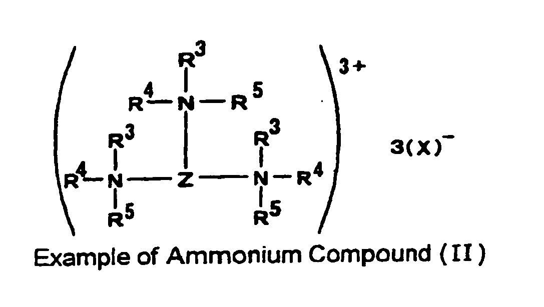

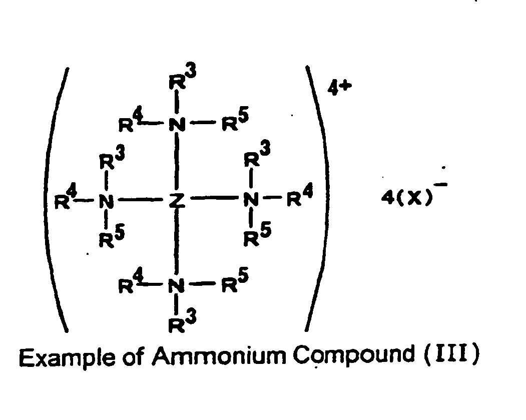

Incidentally R³-, R⁴-, R⁵- and -Z are the same above. Examples of (X)-are monovalent inorganic ion such as a halide ion illustrated by fluoride ion, chloride ion, bromide ion or iodide ion. It is more preferable that (X)- is chloride ion or iodide ion.

More specifically, following examples of the ammonium compound 1 to 13 are mentioned.

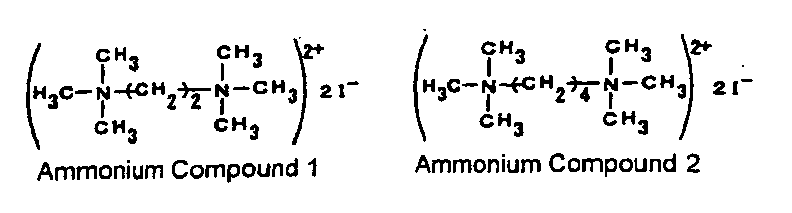

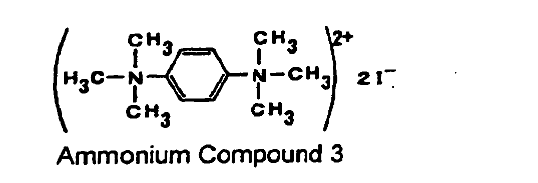

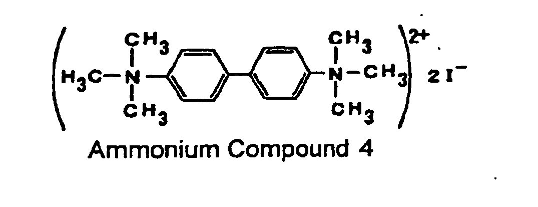

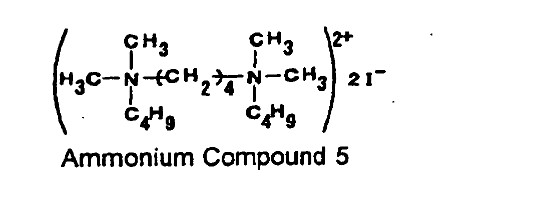

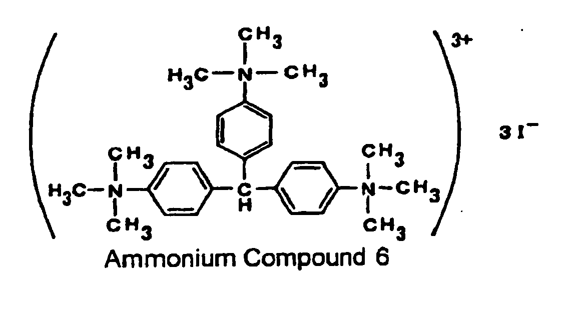

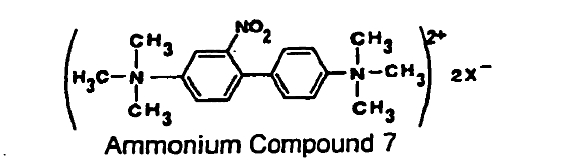

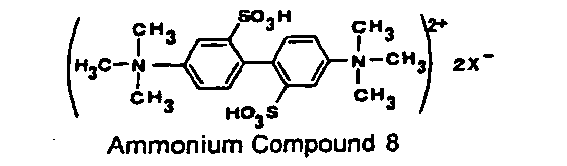

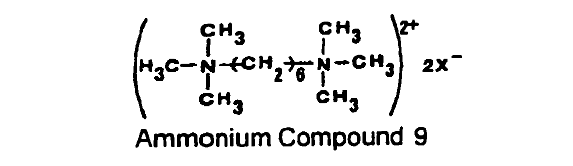

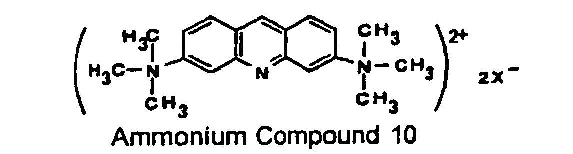

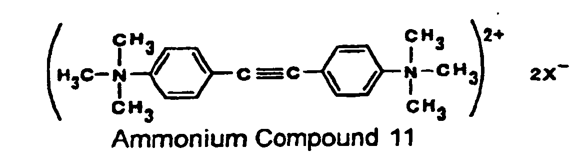

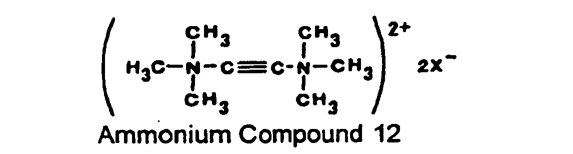

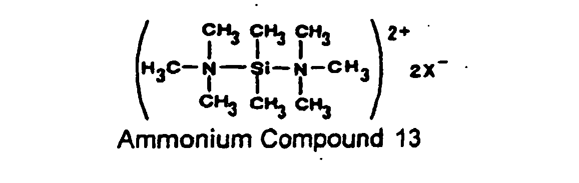

The luminous organic compound represented by above formula (1) is polynuclear complex compound: multi-complex which is suitably combined with the 1,3-butanedione derivative (2), the metal complex intermediate (3) and the quaternary ammonium compound (4) having plural ammonium groups to prepare at will. Examples thereof are following luminous organic compound 1 to 19.

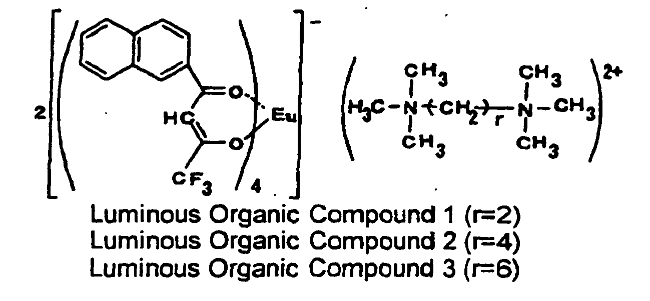

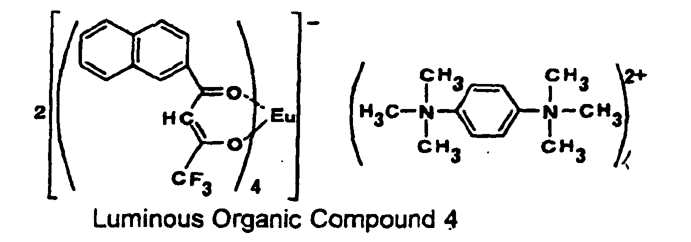

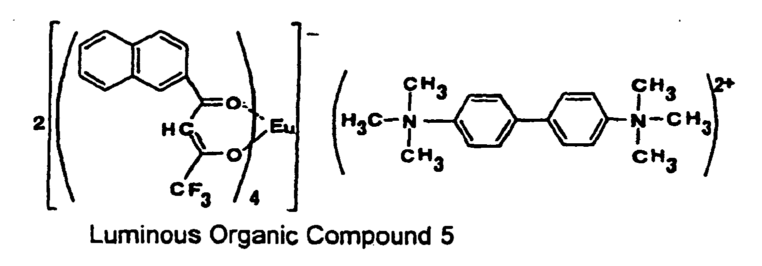

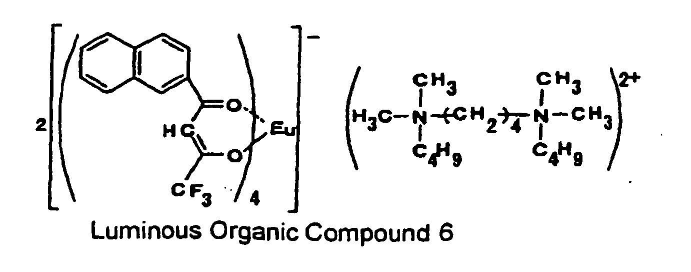

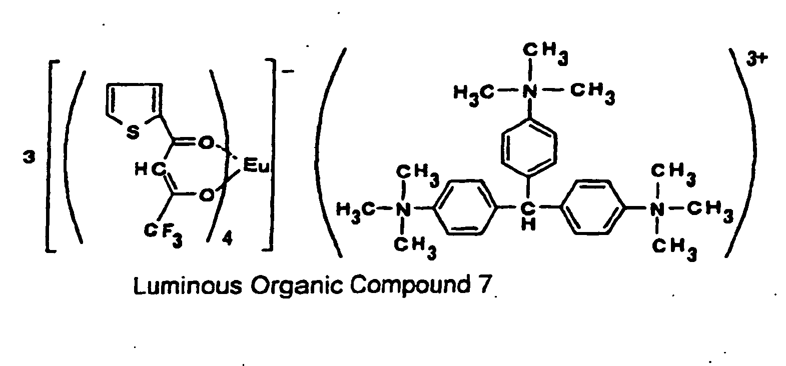

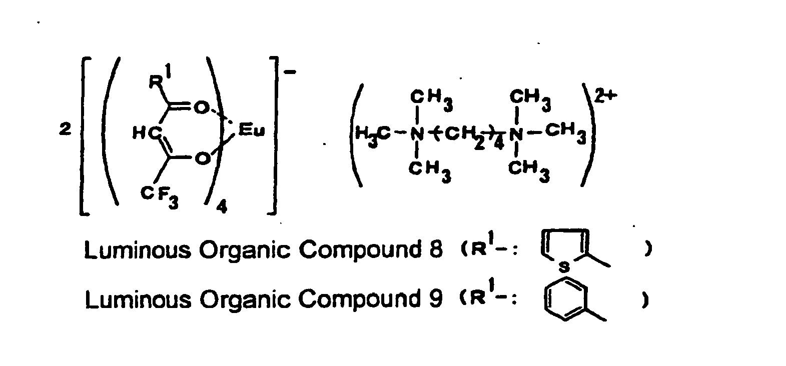

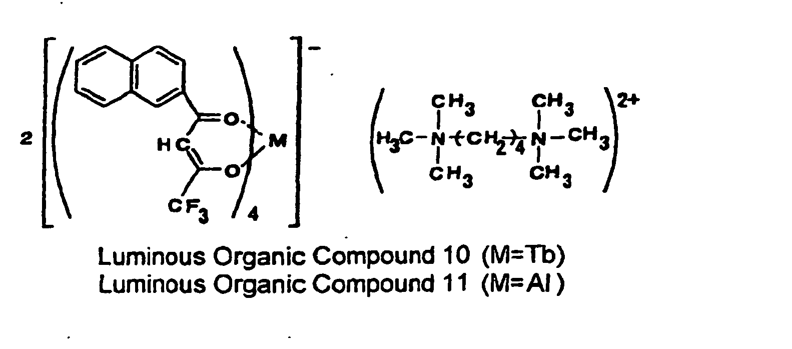

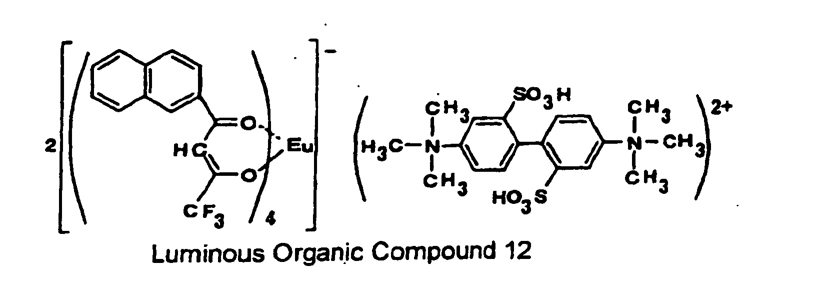

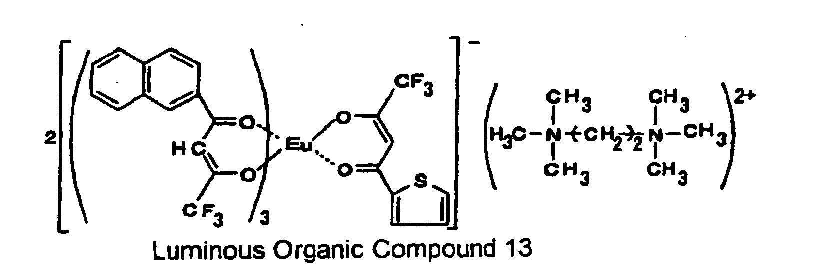

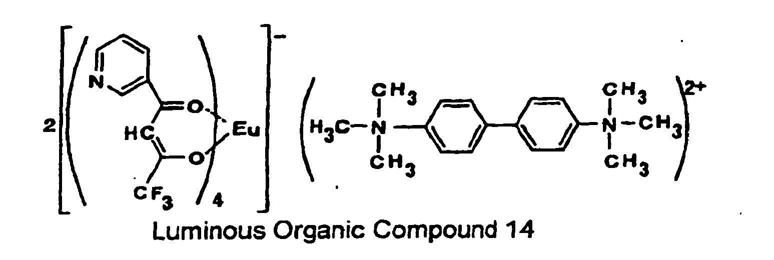

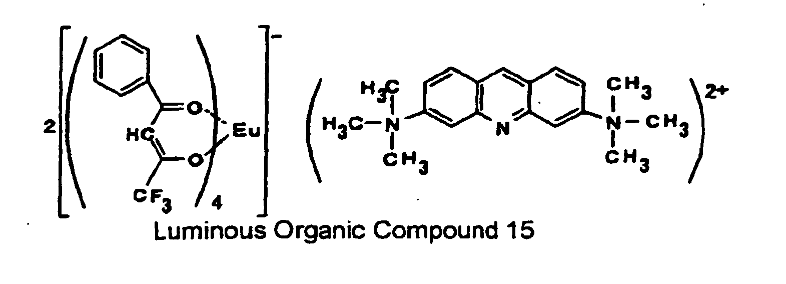

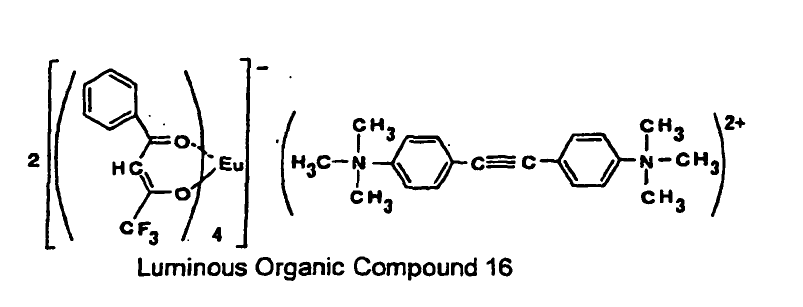

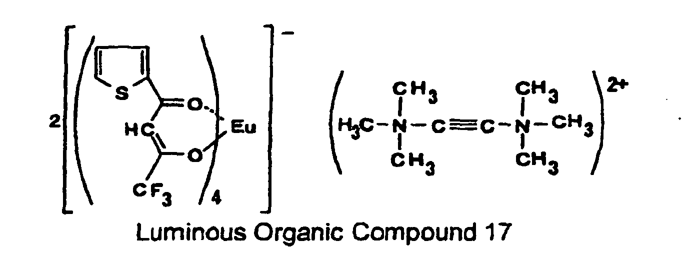

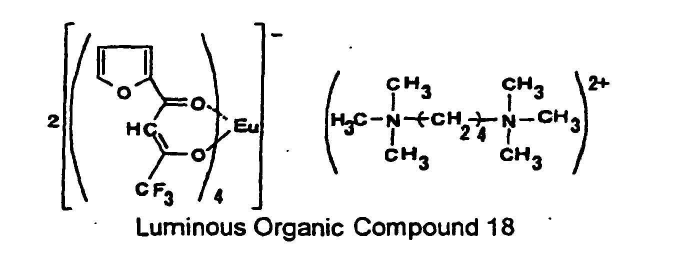

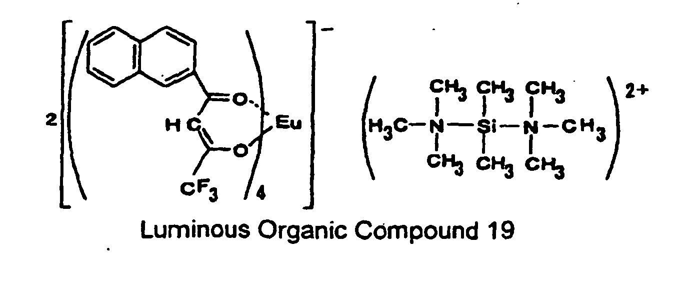

The luminous organic compound is colorless powder. The luminous organic compound as a fluorescent luminous-agent is included in the ink composition.

Next, the ink composition of this invention is explained in detail.

The luminous organic compound is dissolved in solvent or dispersed finely, then mixed with usual ink components such as binder resins and various surface active agents if necessary, to prepare the ink composition.

Concentration of the luminous organic compound in the ink composition is ranging from 0.01 to 5 weight % preferably from 0.1 to 3 weight %. If the concentration is less than 0.01 weight %, the quantity of luminescence of the characters printed by the ink is decreased. So the characters of the information are difficult to view. If the concentration is over 5 weight %, luminous intensity will be less because of self-absorption.

Examples of the solvent in the ink composition are an alcohol solvent such as methanol, ethanol, propanol and isopropanol; a glycol monoether solvent such as ethylene glycol monomethyl ether, ethylene glycol monoethyl ether and propylene glycol monomethyl ether; a glycol solvent such as ethylene glycol, diethylene glycol and propylene glycol; a polyol solvent such as 1,2-hexanediol and 2,4,6-hexanetriol; a ketone solvent such as acetone, methyl ethyl ketone, methyl isobutyl ketone, cyclohexanone and 4-methoxy-4-methylpentanone; a hydrocarbon solvent such as cyclohexane, methylcyclohexane, n-pentane, n-hexane and n-heptane; an ester solvent such as ethyl acetate and n-propyl acetate; dimethyl sulfoxide; N-methyl-2-pyrrolidone, gamma-butyrolactone; a petroleum solvent having high boiling point such as toluene and xylene. These solvents are used solely or used to mix plurally.

In order to maximize the luminous intensity of the luminous organic compound in the ink composition, it is preferable that the solvent is any mixture of the ketone solvent, the alcohol solvent and the ester solvent such as ethyl acetate which can dissolve stably the luminous organic compound under high concentration.

The binder resin for the ink composition is used for fixing the luminous organic compound onto surface of recording paper firmly. It is preferable that the binder resin has high solubility into the above solvent, and can condition the viscosity of the ink composition properly. Examples of the binder resin are a polyvinyl resin such as polyvinyl alcohol, polyvinyl butyral, polyvinyl pyrrolidone, and vinyl pyrrolidone-vinyl acetate copolymer; a polyamine resin such as polyallylamine, polyvinylamine and polyethyleneimine; a polyacrylate resin such as poly(methyl acrylate), poly(ethyl acrylate), poly(methyl methacrylate) and poly(vinyl methacrylate); an amino resin; an alkyd resin; an epoxy resin; a phenol resin; a polyesterimide resin; a polyamide resin; a polyamideimide resin; a silicone resin; a ketone resin; rosin; rosin denaturalized by a resin of phenol, maleic acid or fumaric acid; a petroleum resin; a cellulose resin such as ethyl cellulose and nitro cellulose; a natural resin such as gum Arabic and gelatin.

It is preferable that the binder resin is the polyvinyl resin, the polyacrylate resin or the polyamine resin which are generally used for ink for writing materials, ink-jet printer, and printing press.

Concentration of the binder resin in the ink composition is ranging from 0.5 to 30 weight % preferably from 1 to 20 weight %. If the concentration is less than 0.5 weight %, it is difficult to fix the luminous organic compound firmly onto the non-permeable recording paper especially. If the concentration is over 30 weight %, delivery stability of the ink composition will decrease. Furthermore the luminous intensity of the luminous organic compound will decrease because molecules of the luminous organic compound are covered with the layer of the binder resin thickly. And the luminescence of the luminous organic compound will be disturbed because of luminescence originated from the binder resin.

When the ink composition includes an aqueous solution such as water, mixture of water and water soluble solvent, it may include additive agents such as a surface active agent, a dispersing agent, cyclodextrin (CD), an antifoaming agent. Examples of the surface active agent are an anionic, nonionic, cationic or amphoteric surface active agent such as an alkylsulfuric ester, phosphoric ester, an poly(oxyethylene) alkyl ether and an alkylamine salt; a fluorine-contained surface active agent; acetyleneglycol-contained surface active agent. Examples of the dispersing agent are rosin soap, stearic acid soap, oleic acid soap, sodium di-beta-naphthylmethandisulfate, sodium lauryl sulfate, sodium diethylhexylsulfosuccinate. Examples of cyclodextrin are beta-cyclodextrin, dimethyl-beta-cyclodextrin, methyl-beta-cyclodextrin, hydroxyethyl-beta-cyclodextrin, hydroxypropyl-beta-cyclodextrin. Concentration of the additive agents in the ink composition is ranging from 0.1 to 5 weight % preferably from 1 to 3 weight %.

The luminous organic compound in the ink composition has excellent solubility or dispersibility into the solvent, the binder resin and so on.

The characters of the secret information needed to conceal that printed by the ink composition cannot be recognized visibly under visible radiation. When the printed characters of the information is irradiated with the ultraviolet rays of about 365 nm by an ultraviolet lamp such as a black light lamp, the luminous organic compound is excited and luminous under visible region. As a result, the secret information can be recognized visibly. So the ink composition is useful for the security ink.

Next, the organic electroluminescence elemental device having the luminous layer which comprises the luminous organic compound of this invention is explained in detail.

Generally, the multilayer organic electroluminescence elemental device is composed by a positive electrode/ a hole injection transport layer/ a luminous layer/ an electron injection transport layer/ a negative electrode onto a transparent insulating substrate. Glass or a resin is used as material of the insulating substrate. A transparent electrode which is made from metal such as Au, indium tin oxide (ITO) is used as the material of the positive electrode. A hydrazine derivative or a triarylamine derivative which transports the charge effectively is used as the material of the hole injection transport layer. A luminous pigment is included in the luminous layer. Tris(8-hydroxyquinolinato) aluminum: Alq, a oxadiazole derivative or a perylene derivative which transports the electron to the luminous layer effectively is used as the material of the electron injection transport layer. Alloy such as Mg/Ag, Mg/Au and Al/Li is used as the material of the negative electrode.

The luminous pigment included in the luminous layer which is composed between the positive electrode and negative electrode is the luminous organic compound represented by the formula (1) such as beta-diketone metal complex. The luminous pigment included in the luminous layer may be a matrix made from the luminous organic compound composing the luminescence elemental device, and a blue-luminescent distyrylbenzene derivative or green-luminescent tris(8-hydroxyquinolinato) aluminum: Alq composing another luminescence elemental device. The luminous pigment such as the luminous organic compound makes the luminescence, when the hole from the positive electrode or the hole injection transport layer and the electron from the electron injection transport layer or the negative electrode are recombined.

The luminous layer is composed the material including the above luminous organic compound. Examples of the composing method of the luminous layer are a method which the luminous organic compound is deposited onto the surface of the positive electrode or the hole injection transport layer, and a method which a resin solution including proper amount of the luminous organic compound, for example 1 to 10 weight %, is applied onto the surface of the positive electrode or the hole injection transport layer and dried.

For improving the luminous efficacy and making possibility of full color display, the other fluorescent organic material may be doped in the luminous layer. Examples of the fluorescent organic material are a dope pigment material such as a stilbene pigment, a coumalin pigment, a xanthene pigment, a quinacridone pigment, an europium complex and a zinc porphyrin derivative.

The metal complex intermediates represented by the above formula (3) which 3 molecules of the 1,3-butanedione derivative are coordinated to 1 atom of metal M originated from metallic compound are explained by following Synthetic Examples 1 to 5.

Synthetic Example 1 (synthesis of the metal complex intermediate 1) 39.9g (0.15mol) of 4,4,4-trifluoro-1-(2-nophthyl)-1,3-butanedione that is available from Tokyo Kasei Kogyo Co., Ltd., 18.3g (0.05mol) of europium(III) chloride hexahydrate that is available from Wako Pure Chemical Industries, Ltd., and 150ml of 1N sodium hydroxide were added to 1000ml of ethanol. It was stirred and heated at 60 degrees centigrade for about 3 hours to obtain 46.4g of 1,3-butanedione derivative europium complex: the metal complex intermediate 1 represented by following formula at 98% of yield.

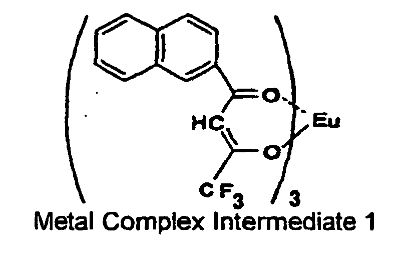

Synthetic Example 2 (synthesis of the metal complex intermediate 2) 33.3g (0.15mol) of 4,4,4-trifluoro-1-(2-thienyl)-1,3-butanedione that is available from Tokyo Kasei Kogyo Co., Ltd., 18.3g (0.05mol) of europium(III) chloride hexahydrate that is available from Wako Pure Chemical Industries, Ltd., and 150ml of 1N sodium hydroxide were added to 1000ml of ethanol. It was stirred and heated at 60 degrees centigrade for about 3 hours to obtain 46.4g of 1,3-butanedione derivative europium complex: the metal complex intermediate 2 represented by following formula at 98% of yield.

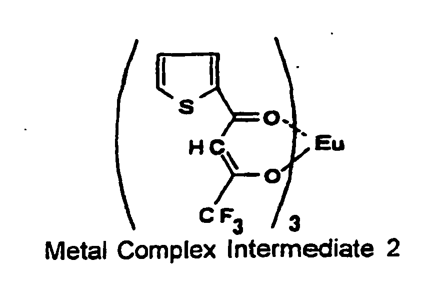

### Synthetic Example 3 (synthesis of the metal complex intermediate 3)

3.24g (0.015mol) of 4,4,4-trifluoro-1-phenyl-1,3-butanedione that is available from Tokyo Kasei Kogyo Co., Ltd., 1.83g (0.005mol) of europium(III) chloride hexahydrate that is available from Wako Pure Chemical Industries, Ltd., and 15ml of 1N sodium hydroxide were added to 100ml of ethanol. It was stirred and heated at 60 degrees centigrade for about 3 hours to obtain 3.91g of 1,3-butanedione derivative europium complex: the metal complex intermediate 3 represented by following formula at 98% of yield.

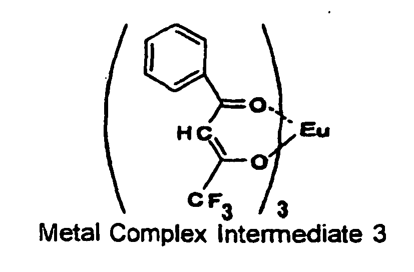

### Synthetic Example 4 (synthesis of the metal complex intermediate 4)

13.3g (0.05mol) of 4,4,4-trifluoro-1-(2-naphthyl)-1,3-butanedione that is available from Tokyo Kasei Kogyo Co., Ltd., 6.22g (0.0167mol) of terbium(III) chloride hexahydrate that is available from Wako Pure Chemical Industries, Ltd., and 50ml of I N sodium hydroxide were added to 500ml of ethanol. It was stirred and heated at 60 degrees centigrade for about 3 hours to obtain 15.3g of 1,3-butanedione derivative terbium complex: the metal complex intermediate 4 represented by following formula at 96% of yield.

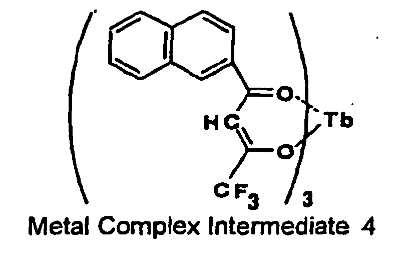

### Synthetic Example 5 (synthesis of the metal complex intermediate 5)

13.3g (0.05mol) of 4,4,4-trifluoro-1-(2-naphthyl)-1,3-butanedione that is available from Tokyo Kasei Kogyo Co., Ltd., 4.02g (0.0167mol) of aluminum(III) chloride hexahydrate, and 50ml of 1N sodium hydroxide were added to 500ml of ethanol. It was stirred and heated at 60 degrees centigrade for about 3 hours to obtain 11.7g of 1,3-butanedione derivative aluminum complex: the metal complex intermediate 5 represented by following formula at 85.2% of yield.

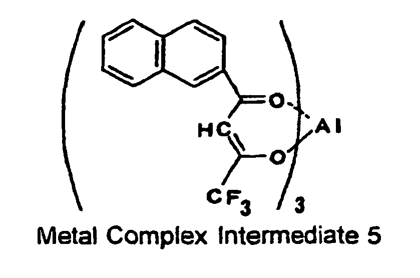

Next, the quaternary ammonium compounds having plural ammonium groups represented by the above formula (4) are explained by following Synthetic Examples 6 to 11.

### Synthetic Example 6 (synthesis of the ammonium compound 1)

4.64g (0.04mol) of N,N,N',N'-tetramethylethylenediamine that is available from Tokyo Kasei Kogyo Co., Ltd., 17.0g (0.12mol) of iodomethane that is available from Wako Pure Chemical Industries, Ltd. were added to 50ml of ethanol. It was stirred and heated at 40 degrees centigrade for about 5 hours to obtain 15.81 g of N,N,N,N',N',N'-hexamethylethylenediammonium diiodide: the ammonium compound 1 represented by following formula at 99% of yield.

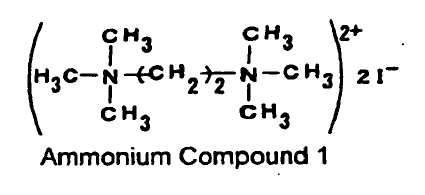

### Synthetic Example 7 (synthesis of the ammonium compound 2)

5.77g (0.04mol) of N,N,N',N'-tetramethyl-1,4-diaminobutane that is available from Tokyo Kasei Kogyo Co., Ltd., 17.0g (0.12mol) of iodomethane that is available from Wako Pure Chemical Industries, Ltd. were added to 50ml of ethanol. It was stirred and heated at 40 degrees centigrade for about 5 hours to obtain 16.82g of N,N,N,N',N',N'-hexamethylbutylenediammonium diiodide: the ammonium compound 2 represented by following formula at 98% of yield.

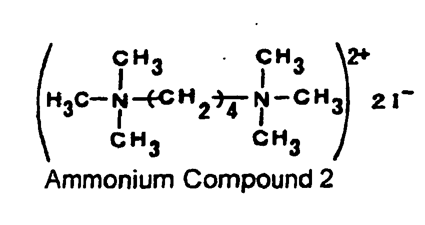

### Synthetic Example 8 (synthesis of the ammonium compound 3)

6.56g (0.04mol) of N,N,N',N'-tetramethyl-p-phenylenediamine that is available from Tokyo Kasei Kogyo Co., Ltd., 142g (1.00mol) of iodomethane that is available from Wako Pure Chemical Industries, Ltd. were added to 600ml of N,N-dimethylformamide. It was stirred and heated at 40 degrees centigrade for about 40 hours to obtain 17.6g of N,N,N,N',N',N'-hexamethyl-p-phenylenediammonium diiodide: the ammonium compound 3 represented by following formula at 98% of yield.

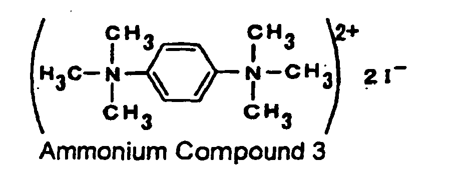

### Synthetic Example 9 (synthesis of the ammonium compound 4)

12.0g (0.05mol) of N,N,N',N'-tetramethylbenzidine that is available from Tokyo Kasei Kogyo Co., Ltd., 355g (2.50mol) of iodomethane that is available from Wako Pure Chemical Industries, Ltd. were added to 5000ml of N,N-dimethylformamide. It was stirred at room temperature for about 40 hours to obtain 25.2g of N,N,N,N',N',N'-hexamethylbenzidinediammonium diiodide: the ammonium compound 4 represented by following formula at 96% of yield.

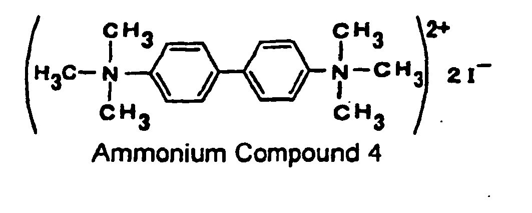

### Synthetic Example 10 (synthesis of the ammonium compound 5)

2.88g (0.02mol) of N,N,N',N'-tetromethyl-1,4-diaminobutane that is available from Tokyo Kasei Kogyo Co., Ltd., 11g (0.06mol) of iodobutane that is available from Wako Pure Chemical Industries, Ltd. were added to 50ml of ethanol. It was stirred and heated at 60 degrees centigrade for about 10 hours to obtain 9.99g of the ammonium compound 5 represented by following formula at 97% of yield.

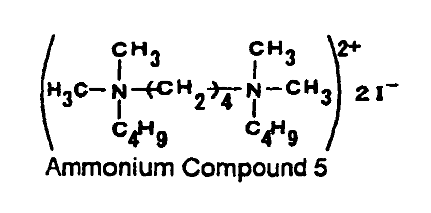

### Synthetic Example 11 (synthesis of the ammonium compound 6)

1.87g (0.005mol) of leuco crystal violet that is available from Tokyo Kasei Kogyo Co., Ltd., 21.3g (0.15mol) of iodomethane that is available from Wako Pure Chemical Industries, Ltd. were added to 100ml of N,N-dimethylformamide. It was stirred and heated at 60 degrees centigrade for about 5 hours to obtain 3.91 g of the ammonium compound 6 represented by following formula at 98% of yield.

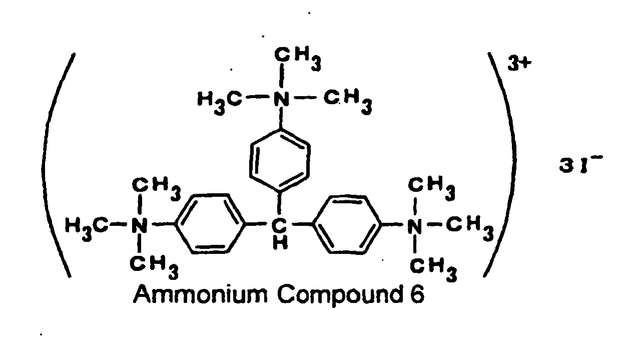

Next, the examples of manufacturing of the luminous organic compound which applies this invention are explained by following Manufacturing Examples 1 to 11.

### Manufacturing Example 1 (manufacture of the luminous organic compound 1)

2.37g (0.0025mol) of the metal complex intermediate 1 obtained in Synthetic Example 1, 0.665g (0.0025mol) of 4,4,4-trifluoro-1-(2-naphthyl)-1,3-butanedione that is available from Tokyo Kasei Kogyo Co., Ltd., were added to 100ml of ethanol, and mixed to solve. After 2.5ml of 1N sodium hydroxide which is the same equivalence to the 1,3-butanedione derivative was added thereto, it was stirred at room temperature for 30 minutes. 0.50g (0.00125mol) of the ammonium compound 1 obtained in Synthetic Example 6 was added thereto, and it was stirred and heated at 60 degrees centigrade for about 5 hours. By thus manufacturing method through two steps, 2.69g of the luminous organic compound 1 represented by following formula was obtained at 83.9% of yield.

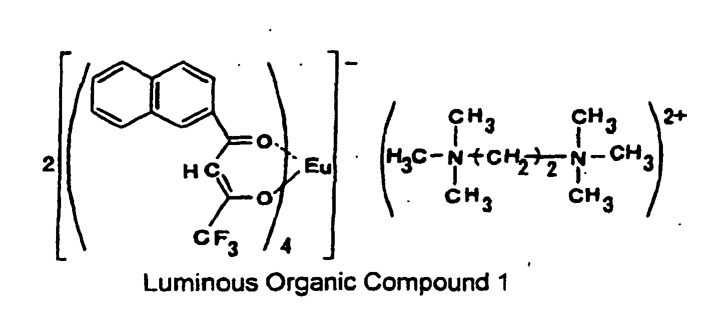

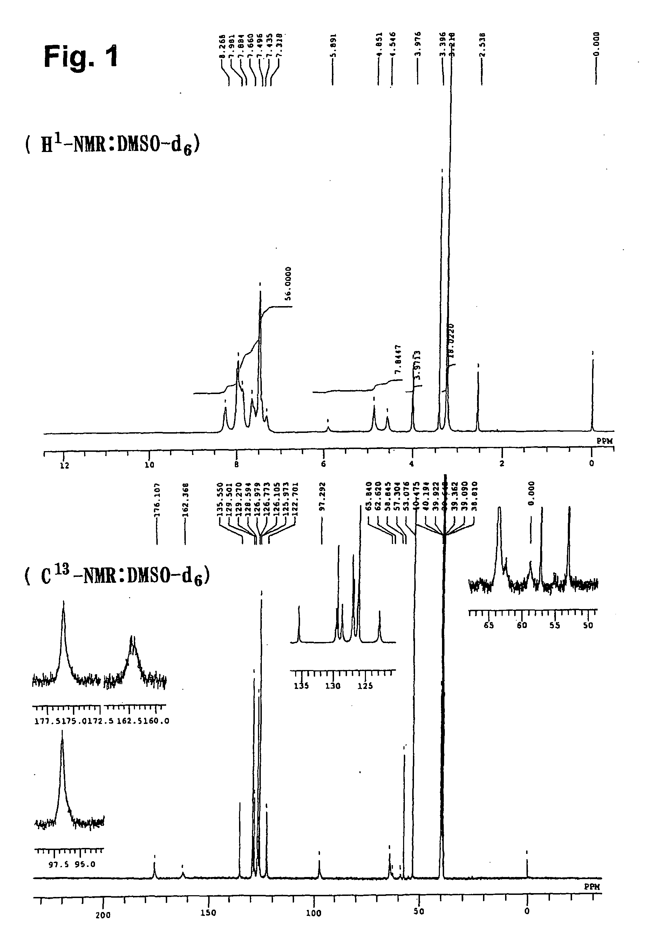

The analytical results of atomic absorption spectrochemical analysis and elementary analysis of the luminous organic compound 1 are indicated in Table 1. The observed results of ¹H nuclear magnetic resonance (¹H-NMR) and ¹³C nuclear magnetic resonance (¹³C-NMR) of the luminous organic compound 1 were shown by Fig. 1. These results prove that the luminous organic compound 1 has the chemical structure represented by the above formula.

### Manufacturing Example 2 (manufacture of the luminous organic compound 2)

2.37g (0.0025mol) of the metal complex intermediate 1 obtained in Synthetic Example 1, 0.665g (0.0025mol) of 4,4,4-trifluoro-1-(2-naphthyl)-1,3-butanedione that is available from Tokyo Kasei Kogyo Co., Ltd., were added to 100ml of ethanol, and mixed to solve. After 2.5ml of 1N sodium hydroxide which is the same equivalence to the 1,3-butanedione derivative was added thereto, it was stirred at room temperature for 30 minutes. 0.50g (0.00125mol) of the ammonium compound 2 obtained in Synthetic Example 7 was added thereto, and it was stirred and heated at 60 degrees centigrade for about 5 hours. By thus manufacturing method through two steps, 2.86g of the luminous organic compound 2 represented by following formula was obtained at 88.0% of yield.

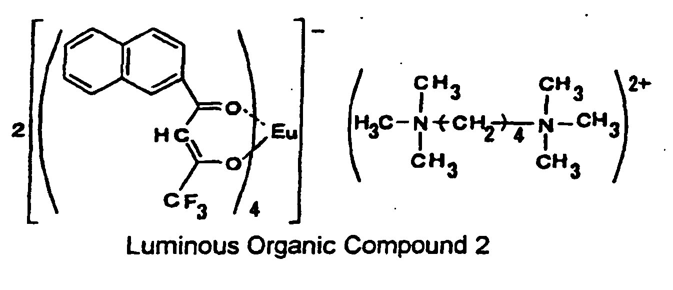

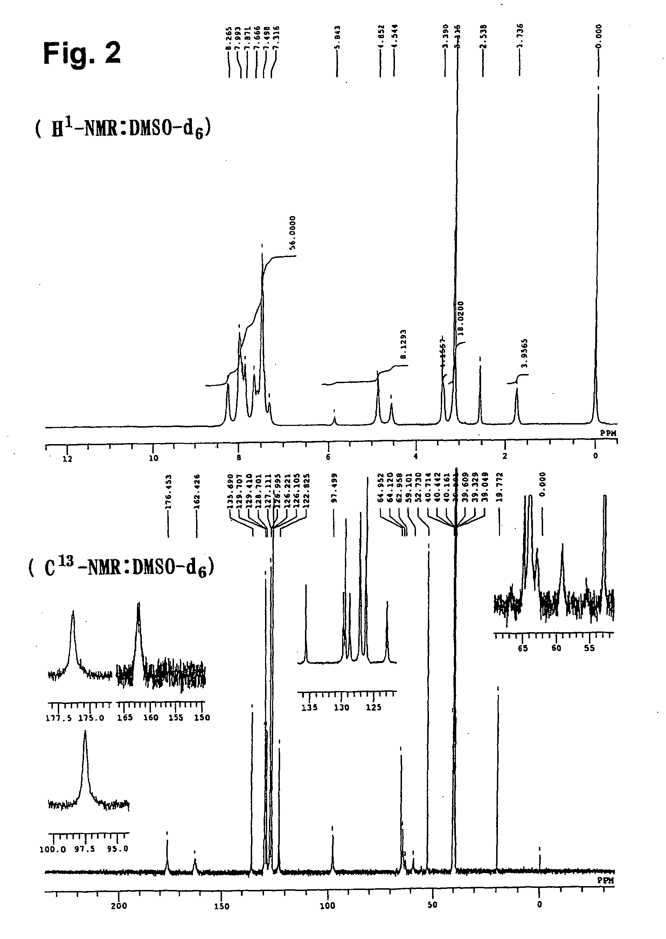

The analytical results of atomic absorption spectrochemical analysis and elementary analysis of the luminous organic compound 2 were indicated in Table 1. The observed results of ¹H-NMR and ¹³C-NMR of the luminous organic compound 2 were shown by Fig. 2. These results prove that the luminous organic compound 2 has the chemical structure represented by the above formula.

### Manufacturing Example 3 (manufacture of the luminous organic compound 3)

2.37g (0.0025mol) of the metal complex intermediate 1 obtained in Synthetic Example 1, 0.665g (0.0025mol) of 4,4,4-trifluoro-1-(2-naphthyl)-1,3-butanedione that is available from Tokyo Kasei Kogyo Co., Ltd., were added to 100ml of ethanol, and mixed to solve. After 2.5ml of 1N sodium hydroxide which is the same equivalence to the 1,3-butanedione derivative was added thereto, it was stirred at room temperature for 30 minutes. 0.386g (0.00125mol) of hexamethonium chloride that is available from Tokyo Kasei Kogyo Co., Ltd. was added thereto, and it was stirred and heated at 60 degrees centigrade for about 5 hours. By thus manufacturing method through two steps, 2.93g of the luminous organic compound 3 represented by following formula was obtained at 89.4% of yield.

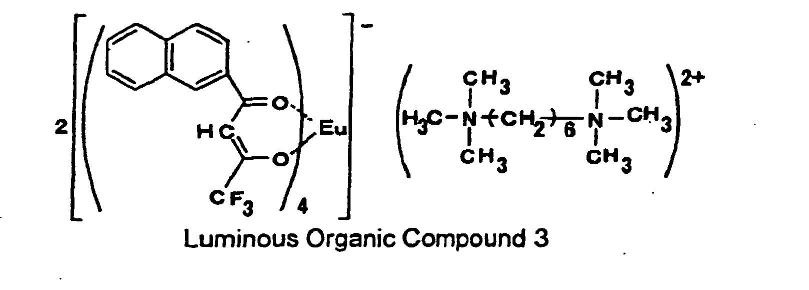

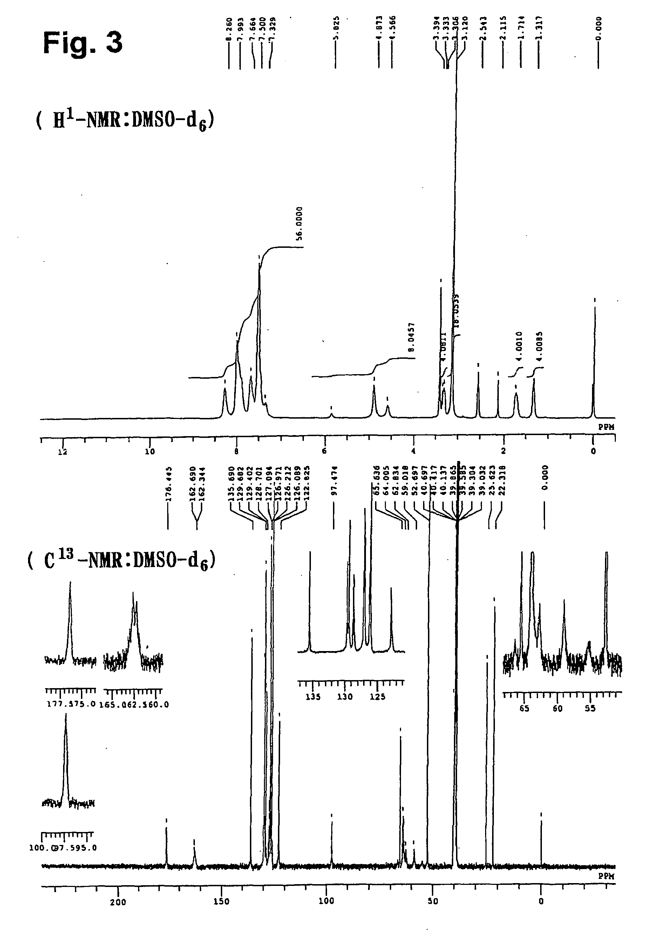

The analytical results of atomic absorption spectrochemical analysis and elementary analysis of the luminous organic compound 3 were indicated in Table 1. The observed results of ¹H-NMR and ¹³C-NMR of the luminous organic compound 3 were shown by Fig. 3. These results prove that the luminous organic compound 3 has the chemical structure represented by the above formula.

### Manufacturing Example 4 (manufacture of the luminous organic compound 4)

2.37g (0.0025mol) of the metal complex intermediate 1 obtained in Synthetic Example 1, 0.665g (0.0025mol) of 4,4,4-trifluoro-1-(2-naphthyl)-1,3-butanedione that is available from Tokyo Kasei Kogyo Co., Ltd., were added to 100ml of ethanol, and mixed to solve. After 2.5ml of 1 N sodium hydroxide which is the same equivalence to the 1,3-butanedione derivative was added thereto, it was stirred at room temperature for 30 minutes. 0.560g (0.00125mol) of the ammonium compound 3 obtained in Synthetic Example 8 was added thereto, and it was stirred and heated at 60 degrees centigrade for about 5 hours. By thus manufacturing method through two steps, 2.92g of the luminous organic compound 4 represented by following formula was obtained at 89.0% of yield.

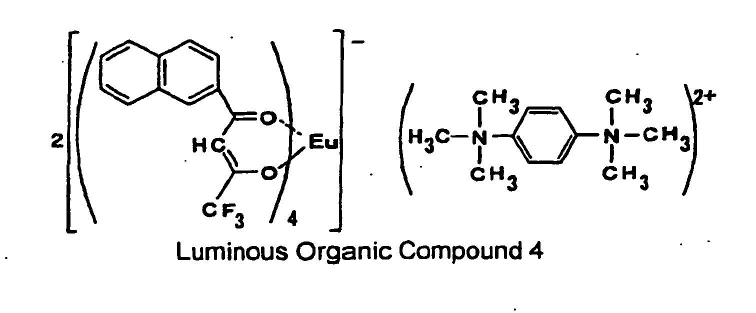

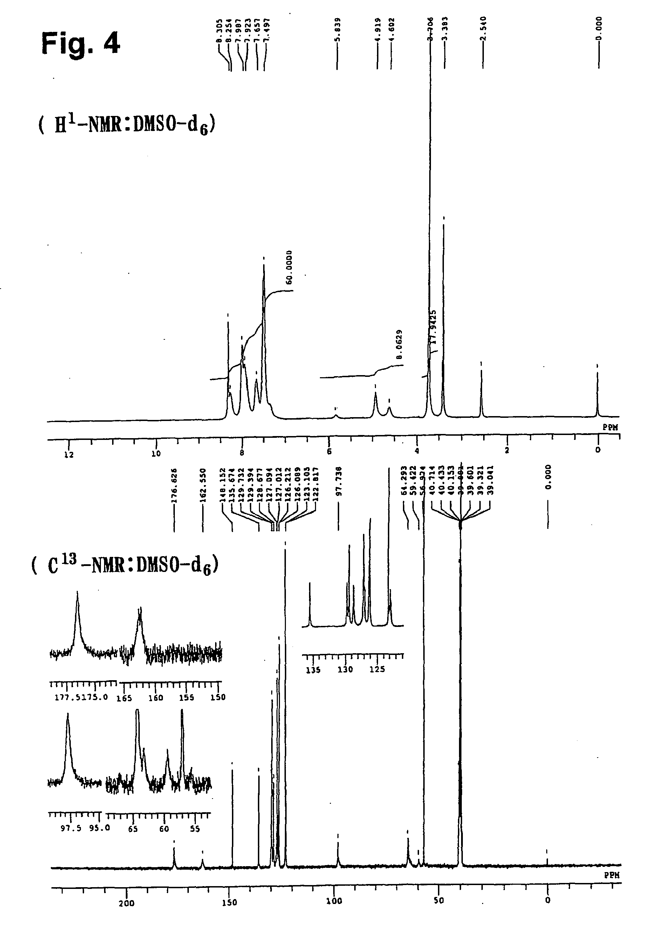

The analytical results of atomic absorption spectrochemical analysis and elementary analysis of the luminous organic compound 4 were indicated in Table 1. The observed results of ¹H-NMR and ¹³C-NMR of the luminous organic compound 4 were shown by Fig. 4. These results prove that the luminous organic compound 4 has the chemical structure represented by the above formula.

### Manufacturing Example 5 (manufacture of the luminous organic compound 5)

2.37g (0.0025mol) of the metal complex intermediate 1 obtained in Synthetic Example 1, 0.665g (0.0025mol) of 4,4,4-trifluoro-1-(2-naphthyl)-1,3-butanedione that is available from Tokyo Kasei Kogyo Co., Ltd., were added to 100ml of ethanol, and mixed to solve. After 2.5ml of 1 N sodium hydroxide which is the same equivalence to the 1,3-butanedione derivative was added thereto, it was stirred at room temperature for 30 minutes. 0.655g (0.00125mol) of the ammonium compound 4 obtained in Synthetic Example 9 was added thereto, and it was stirred and heated at 60 degrees centigrade for about 5 hours. By thus manufacturing method through two steps, 3.02g of the luminous organic compound 5 represented by following formula was obtained at 89.1% of yield.

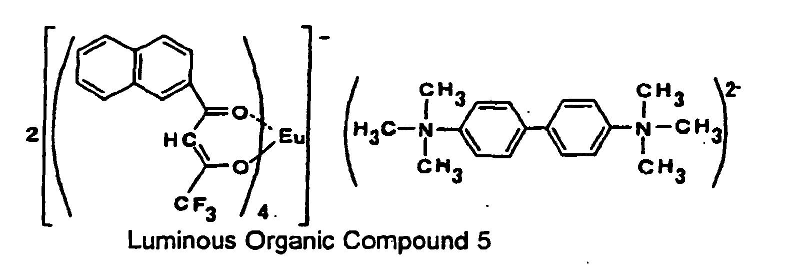

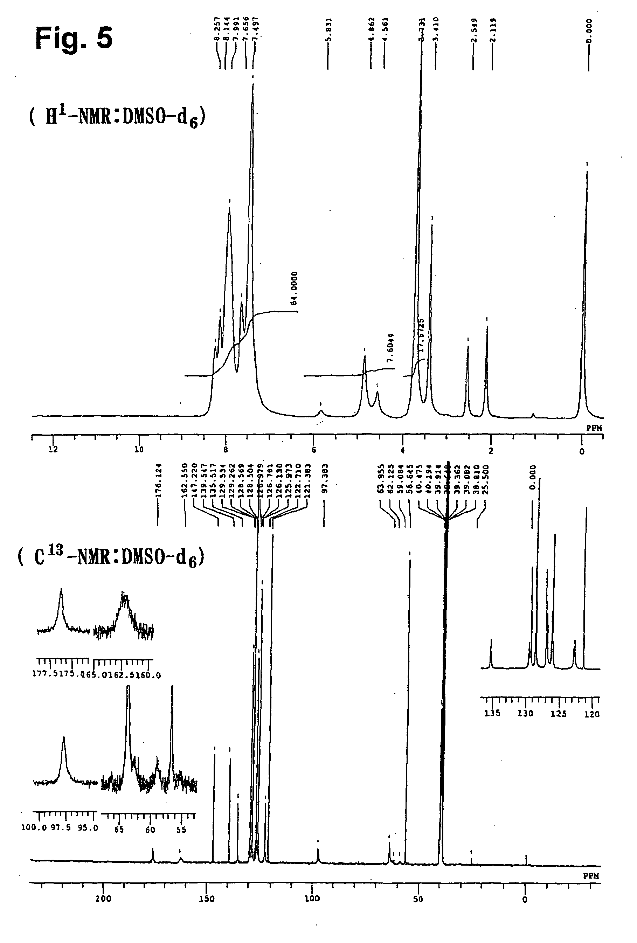

The analytical results of atomic absorption spectrochemical analysis and elementary analysis of the luminous organic compound 5 were indicated in Table 1. The observed results of ¹H-NMR and ¹³C-NMR of the luminous organic compound 5 were shown by Fig. 5. These results prove that the luminous organic compound 5 has the chemical structure represented by the above formula.

### Manufacturing Example 6 (manufacture of the luminous organic compound 6)

2.37g (0.0025mol) of the metal complex intermediate 1 obtained in Synthetic Example 1, 0.665g (0.0025mol) of 4,4,4-trifluoro-1-(2-naphthyl)-1,3-butanedione that is available from Tokyo Kasei Kogyo Co., Ltd., were added to 100ml of ethanol, and mixed to solve. After 2.5ml of 1N sodium hydroxide which is the same equivalence to the 1,3-butanedione derivative was added thereto, it was stirred at room temperature for 30 minutes. 0.640g (0.00125mol) of the ammonium compound 5 obtained in Synthetic Example 10 was added thereto, and it was stirred and heated at 60 degrees centigrade for about 5 hours. By thus manufacturing method through two steps, 3.01 g of the luminous organic compound 6 represented by following formula was obtained at 90.0% of yield.

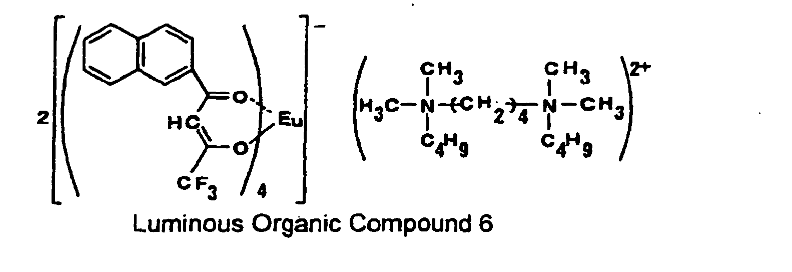

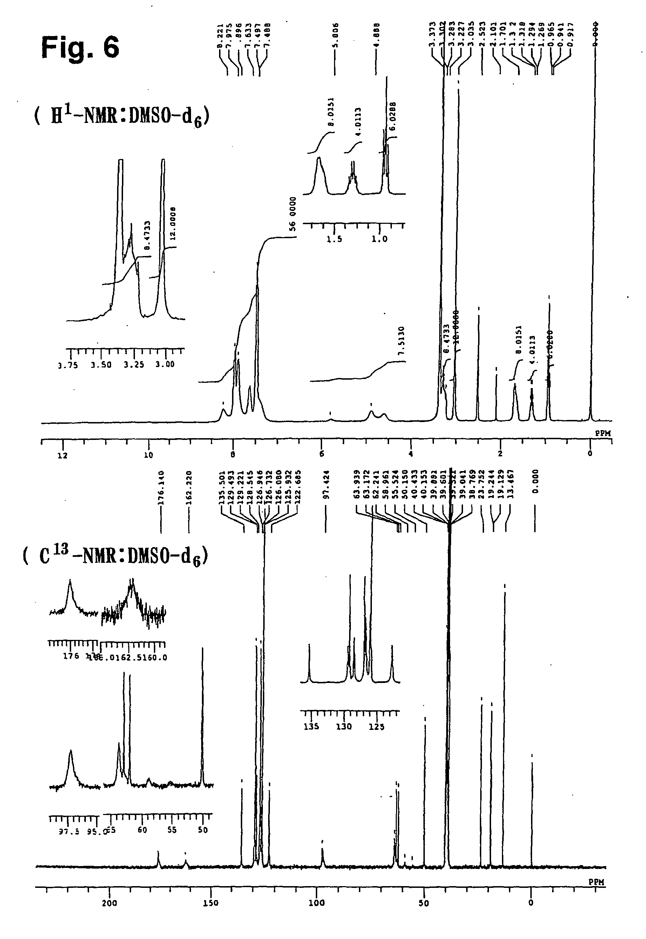

The analytical results of atomic absorption spectrochemical analysis and elementary analysis of the luminous organic compound 6 were indicated in Table 1. The observed results of ¹H-NMR and ¹³C-NMR of the luminous organic compound 6 were shown by Fig. 6. These results prove that the luminous organic compound 6 has the chemical structure represented by the above formula.

### Manufacturing Example 7 (manufacture of the luminous organic compound 7)

2.37g (0.0025mol) of the metal complex intermediate 1 obtained in Synthetic Example 1, 0.665g (0.0025mol) of 4,4,4-trifluoro-1-(2-thienyl)-1,3-butanedione that is available from Tokyo Kasei Kogyo Co., Ltd., were added to 100ml of ethanol, and mixed to solve. After 2.5ml of 1N sodium hydroxide which is the same equivalence to the 1,3-butanedione derivative was added thereto, it was stirred at room temperature for 30 minutes. 0.666g (0.000833mol) of the ammonium compound 6 obtained in Synthetic Example 11 was added thereto, and it was stirred and heated at 60 degrees centigrade for about 5 hours. By thus manufacturing method through two steps, 2.96g of the luminous organic compound 7 represented by following formula was obtained at 87.5% of yield.

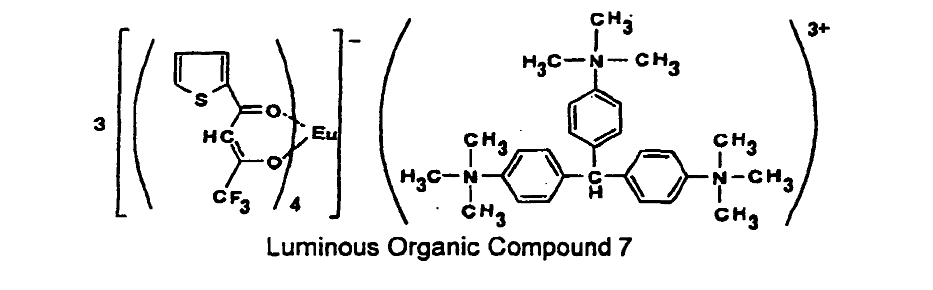

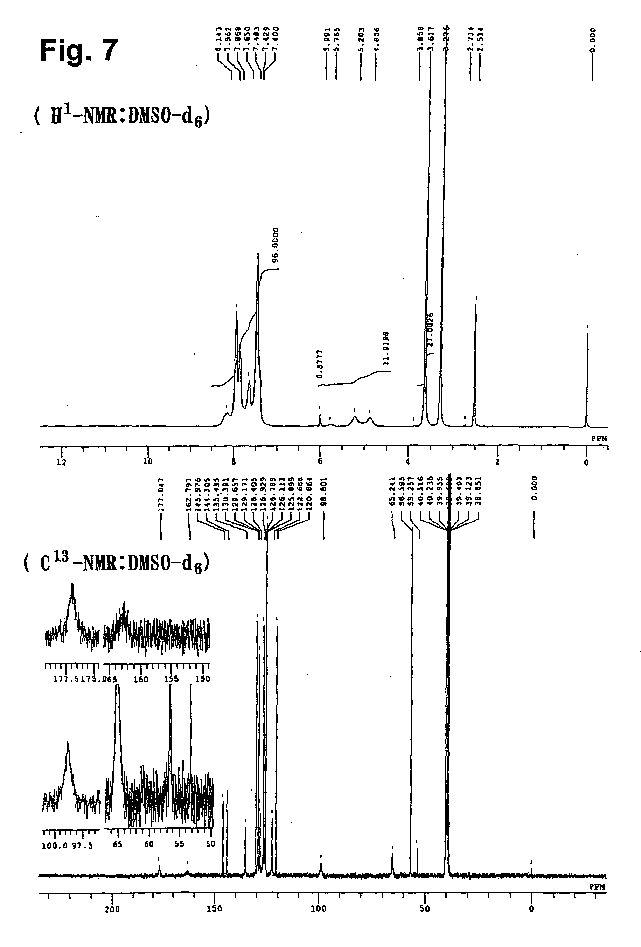

The analytical results of atomic absorption spectrochemical analysis and elementary analysis of the luminous organic compound 7 were indicated in Table 1. The observed results of ¹H-NMR and ¹³C-NMR of the luminous organic compound 7 were shown by Fig. 7. These results prove that the luminous organic compound 7 has the chemical structure represented by the above formula.

### Manufacturing Example 8 (manufacture of the luminous organic compound 8)

2.04g (0.0025mol) of the metal complex intermediate 2 obtained in Synthetic Example 2, 0.555g (0.0025mol) of 4,4,4-trifluoro-1-(2-thienyl)-1,3-butanedione that is available from Tokyo Kasei Kogyo Co., Ltd., were added to 100ml of ethanol, and mixed to solve. After 2.5ml of 1N sodium hydroxide which is the same equivalence to the 1,3-butanedione derivative was added thereto, it was stirred at room temperature for 30 minutes. 0.535g (0.00125mol) of the ammonium compound 2 obtained in Synthetic Example 7 was added thereto, and it was stirred and heated at 60 degrees centigrade for about 5 hours. By thus manufacturing method through two steps, 2.45g of the luminous organic compound 8 represented by following formula was obtained at 87.1 % of yield.

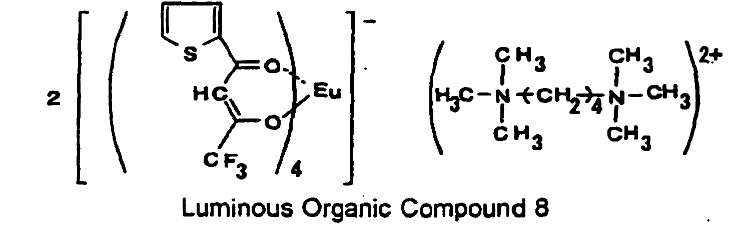

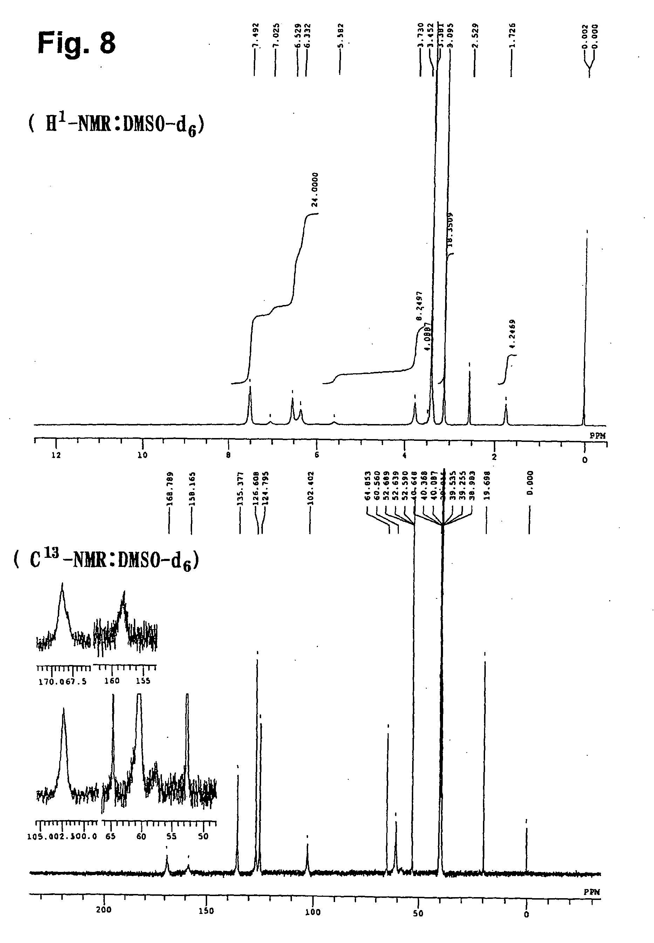

The analytical results of atomic absorption spectrochemical analysis and elementary analysis of the luminous organic compound 8 were indicated in Table 1. The observed results of ¹H-NMR and ¹³C-NMR of the luminous organic compound 8 were shown by Fig. 8. These results prove that the luminous organic compound 8 has the chemical structure represented by the above formula.

### Manufacturing Example 9 (manufacture of the luminous organic compound 9)

1.99g (0.0025mol) of the metal complex intermediate 3 obtained in Synthetic Example 3, 0.540g (0.0025mol) of 4,4,4-trifluoro-1-phenyl-1,3-butanedione that is available from Tokyo Kasei Kogyo Co., Ltd., were added to 100ml of ethanol, and mixed to solve. After 2.5ml of 1N sodium hydroxide which is the same equivalence to the 1,3-butanedione derivative was added thereto, it was stirred at room temperature for 30 minutes. 0.535g (0.00125mol) of the ammonium compound 2 obtained in Synthetic Example 7 was added thereto, and it was stirred and heated at 60 degrees centigrade for about 5 hours. By thus manufacturing method through two steps, 2.37g of the luminous organic compound 9 represented by following formula was obtained at 86.0% of yield.

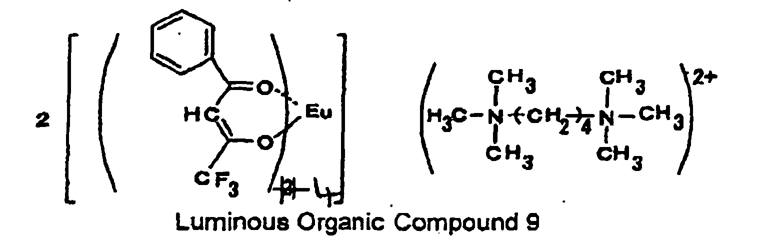

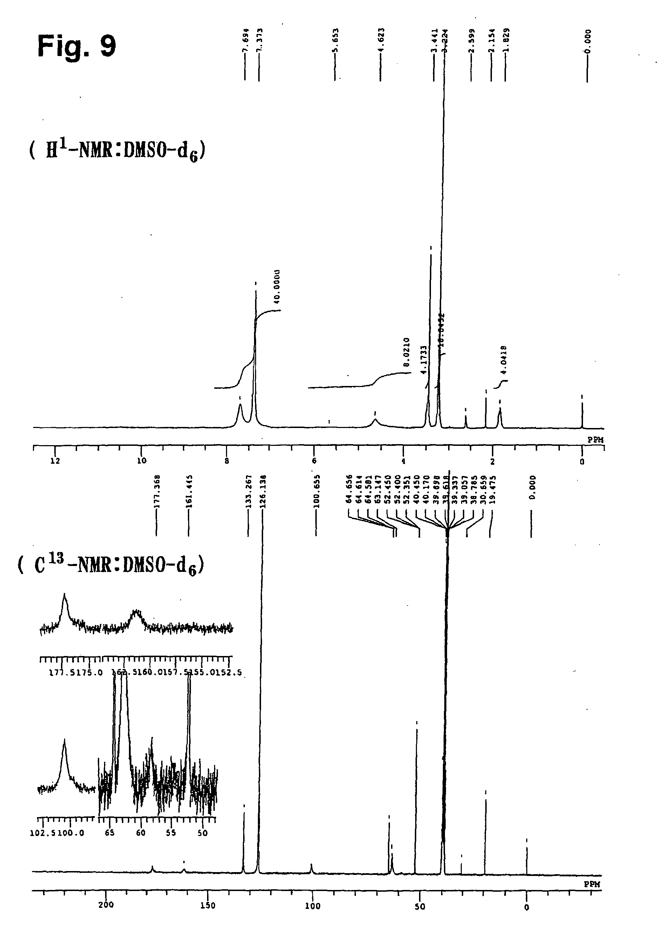

The analytical results of atomic absorption spectrochemical analysis and elementary analysis of the luminous organic compound 9 were indicated in Table 1. The observed results of ¹H-NMR and ¹³C-NMR of the luminous organic compound 9 were shown by Fig. 9. These results prove that the luminous organic compound 9 has the chemical structure represented by the above formula.

### Manufacturing Example 10 (manufacture of the luminous organic compound 10)

2.39g (0.0025mol) of the metal complex intermediate 4 obtained in Synthetic Example 4, 0.665g (0.0025mol) of 4,4,4-trifluoro-1-(2-naphthyl)-1,3-butanedione that is available from Tokyo Kasei Kogyo Co., Ltd., were added to 100ml of ethanol, and mixed to solve. After 2.5ml of 1N sodium hydroxide which is the same equivalence to the 1,3-butanedione derivative was added thereto, it was stirred at room temperature for 30 minutes. 0.535g (0.00125mol) of the ammonium compound 2 obtained in Synthetic Example 7 was added thereto, and it was stirred and heated at 60 degrees centigrade for about 5 hours. By thus manufacturing method through two steps, 2.85g of the luminous organic compound 10 represented by following formula was obtained at 87.2% of yield.

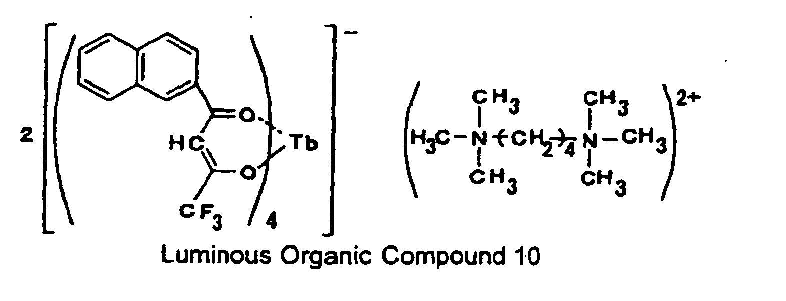

The analytical results of atomic absorption spectrochemical analysis and elementary analysis of the luminous organic compound 10 were indicated in Table 1. These results prove that the luminous organic compound 10 has the chemical structure represented by the above formula.

### Manufacturing Example 11(manufacture of the luminous organic compound 11)

2.03g (0.0025mol) of the metal complex intermediate 5 obtained in Synthetic Example 5, 0.665g (0.0025mol) of 4,4,4-trifluoro-1-(2-naphthyl)-1,3-butanedione that is available from Tokyo Kasei Kogyo Co., Ltd., were added to 100ml of ethanol, and mixed to solve. After 2.5ml of 1N sodium hydroxide which is the same equivalence to the 1,3-butanedione derivative was added thereto, it was stirred at room temperature for 30 minutes. 0.535g (0.00125mol) of the ammonium compound 2 obtained in Synthetic Example 7 was added thereto, and it was stirred and heated at 60 degrees centigrade for about 5 hours. By thus manufacturing method through two steps, 2.52g of the luminous organic compound 11 represented by following formula was obtained at 85.8% of yield.

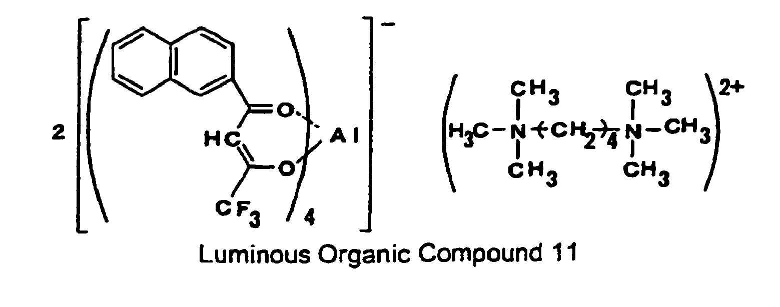

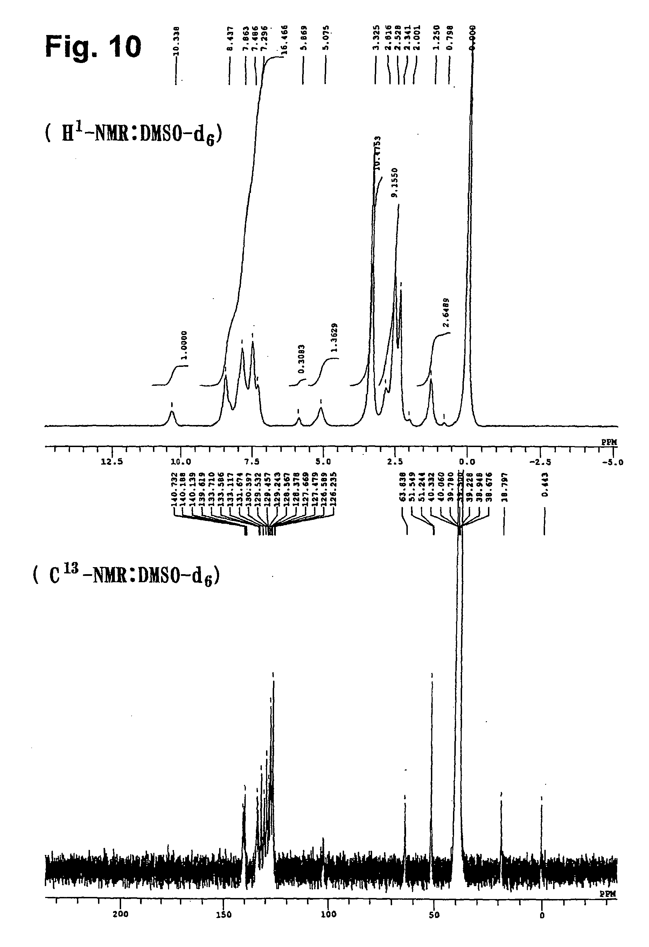

The analytical results of atomic absorption spectrochemical analysis and elementary analysis of the luminous organic compound 11 were indicated in Table 1. The observed results of ¹H-NMR and ¹³C-NMR of the luminous organic compound 11 were shown by Fig. 10. These results prove that the luminous organic compound 11 has the chemical structure represented by the above formula.

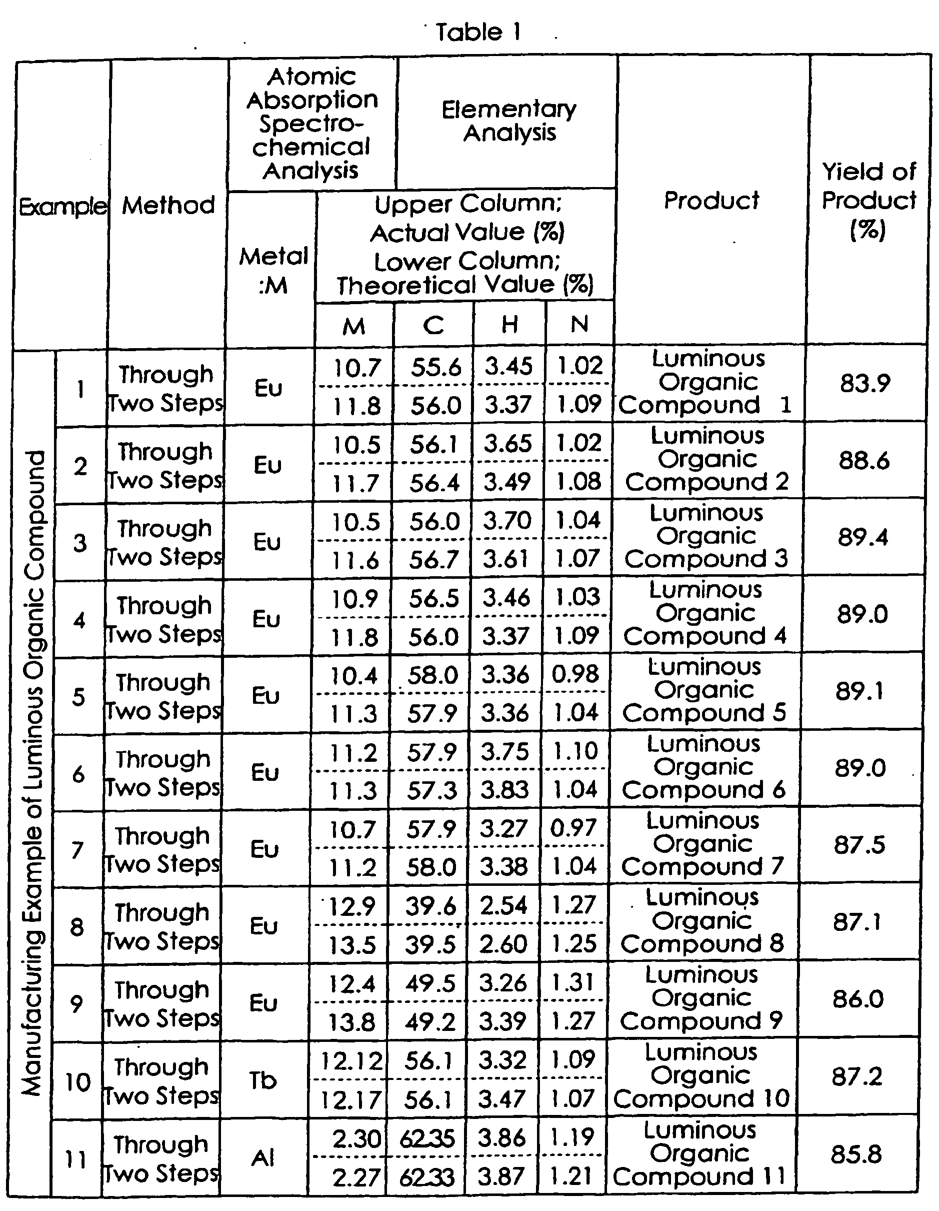

Next, comparative examples of manufacturing a luminous organic compound which does not apply this invention are explained by following Comparative Manufacturing Examples 1 to 9.

### Comparative Manufacturing Example 1 (manufacture of a comparative compound 1)

2.37g (0.0025mol) of the metal complex intermediate 1 obtained in Synthetic Example 1, 0.665g (0.0025mol) of 4,4,4-trifluoro-1-(2-naphthyl)-1,3-butanedione that is available from Tokyo Kasei Kogyo Co., Ltd., were added to 100ml of ethanol, and mixed to solve. After 2.5ml of 1N sodium hydroxide which is the same equivalence to the 1,3-butanedione derivative was added thereto, it was stirred at room temperature for 30 minutes. 0.275g (0.0025mol) of tetramethylammonium chloride that is available from Wako Pure Chemical Industries, Ltd. was added thereto, and it was stirred and heated at 60 degrees centigrade for about 5 hours. 2.81 g of comparative compound 1 represented by following formula was obtained at 87.4% of yield.

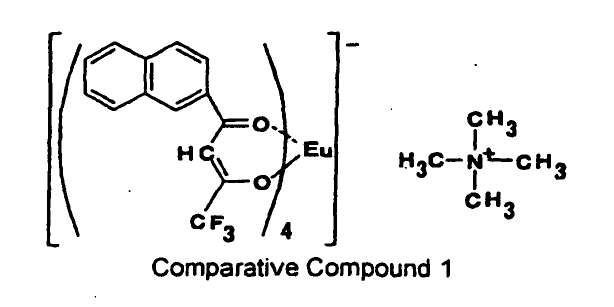

### Comparative Manufacturing Example 2 (manufacture of a comparative compound 2)

2.04g (0.0025mol) of the metal complex intermediate 2 obtained in Synthetic Example 2, 0.555g (0.0025mol) of 4,4,4-trifluoro-1-(2-thienyl)-1,3-butanedione that is available from Tokyo Kasei Kogyo Co., Ltd., were added to 100ml of ethanol, and mixed to solve. After 2.5ml of 1N sodium hydroxide which is the same equivalence to the 1,3-butanedione derivative was added thereto, it was stirred at room temperature for 30 minutes. 0.275g (0.0025mol) of tetramethylammonium chloride that is available from Wako Pure Chemical Industries, Ltd. was added thereto, and it was stirred and heated at 60 degrees centigrade for about 5 hours. 2.11g of a comparative compound 2 represented by following formula was obtained at 65.0% of yield.

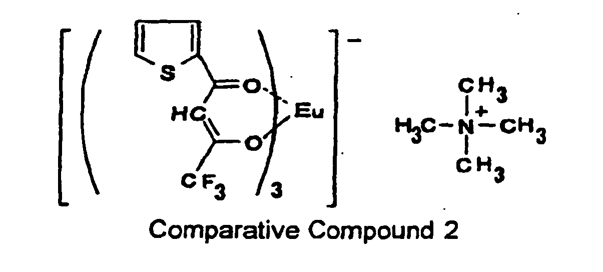

### Comparative Manufacturing Example 3 (manufacture of a comparative compound 3)

1.99g (0.0025mol) of the metal complex intermediate 3 obtained in Synthetic Example 3, 0.540g (0.0025mol) of 4,4,4-trifluoro-1-phenyl-1,3-butanedione that is available from Tokyo Kasei Kogyo Co., Ltd., were added to 100ml of ethanol, and mixed to solve.

After 2.5ml of 1N sodium hydroxide which is the same equivalence to the 1,3-butanedione derivative was added thereto, it was stirred at room temperature for 30 minutes. 0.275g (0.0025mol) of tetramethylammonium chloride that is available from Wako Pure Chemical Industries, Ltd. was added thereto, and it was stirred and heated at 60 degrees centigrade for about 5 hours. 2.25g of a comparative compound 3 represented by following formula was obtained at 82.5% of yield.

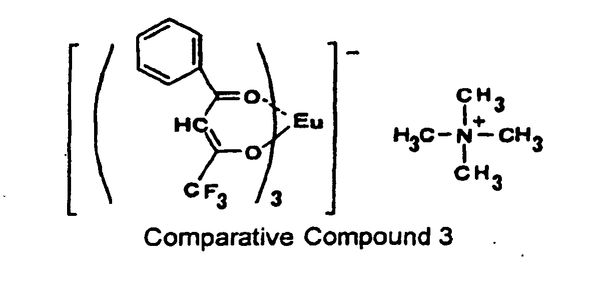

### Comparative Manufacturing Example 4 (manufacture of the luminous organic compound 1 through one step)

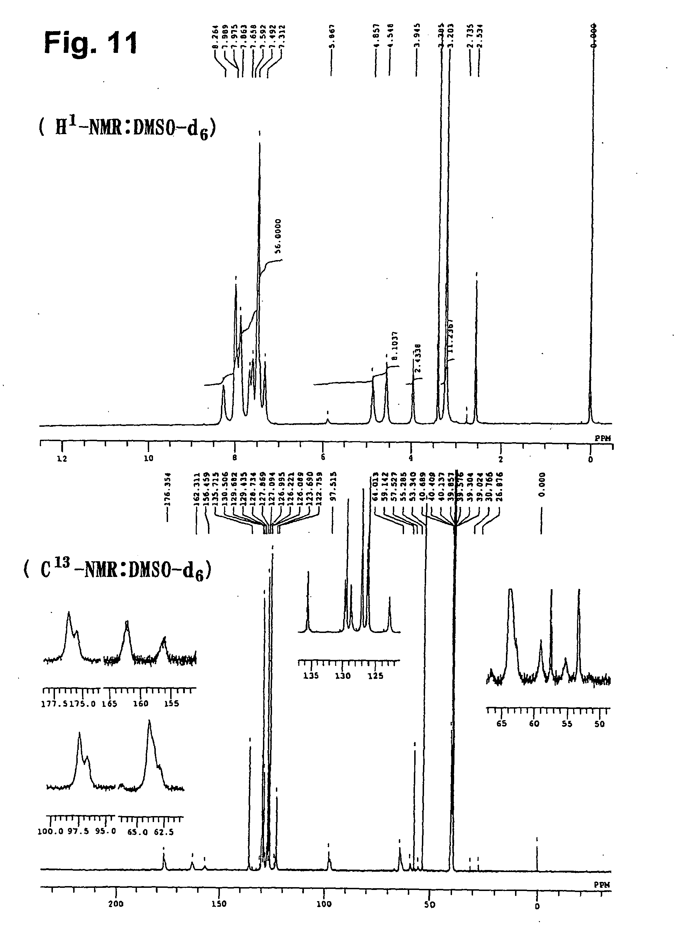

2.66g (0.010mol) of 4,4,4-trifluoro-1-(2-naphthyl)-1,3-butanedione that is available from Tokyo Kasei Kogyo Co., Ltd. was added to 100ml of ethanol, and mixed to solve. After 10.0ml of 1N sodium hydroxide which is the same equivalence to the 1,3-butanedione derivative was added thereto. Moreover 0.500g (0.00125mol) of the ammonium compound 1 obtained in Synthetic Example 6 and 0.915g (0.0025mol) of europium(III) chloride hexahydrate that is available from Wako Pure Chemical Industries, Ltd. were added thereto. It was stirred and heated at 60 degrees centigrade for about 5 hours. 2.38g of complex mixture including the luminous organic compound 1 and other impure complex was obtained at 74.1% of yield that was converted to an assumed value of the luminous organic compound 1 having 100% purity. The observed results of ¹H-NMR and ¹³C-NMR of the complex mixture were shown by Fig. 11.

### Comparative Manufacturing Example 5 (manufacture of the luminous organic compound 2 through one step)

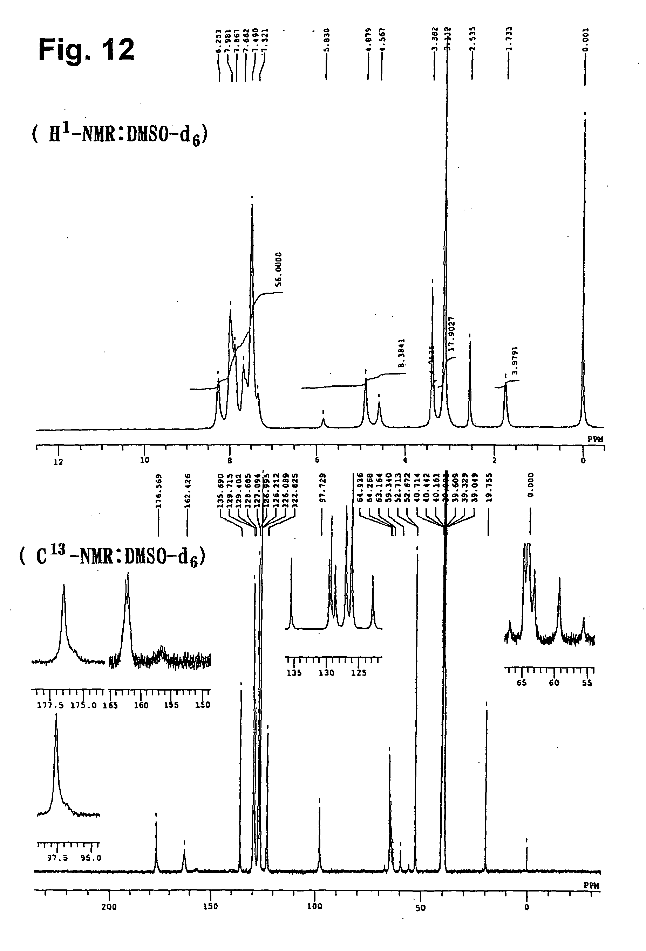

2.66g (0.010mol) of 4,4,4-trifluoro-1-(2-naphthyl)-1,3-butanedione that is available from Tokyo Kasei Kogyo Co., Ltd. was added to 100ml of ethanol, and mixed to solve. After 10.0ml of 1N sodium hydroxide which is the same equivalence to the 1,3-butanedione derivative was added thereto. Moreover 0.535g (0.00125mol) of the ammonium compound 2 obtained in Synthetic Example 7 and 0.915g (0.0025mol) of europium(III) chloride hexahydrate that is available from Wako Pure Chemical Industries, Ltd. were added thereto. It was stirred and heated at 60 degrees centigrade for about 5 hours. 2.65g of complex mixture including the luminous organic compound 2 and other impure complex was obtained at 81.4% of yield that was converted to an assumed value of the luminous organic compound 2 having 100% purity. The observed results of ¹H-NMR and ¹³C-NMR of the complex mixture were shown by Fig. 12.

### Comparative Manufacturing Example 6 (manufacture of the luminous organic compound 6 through one step)

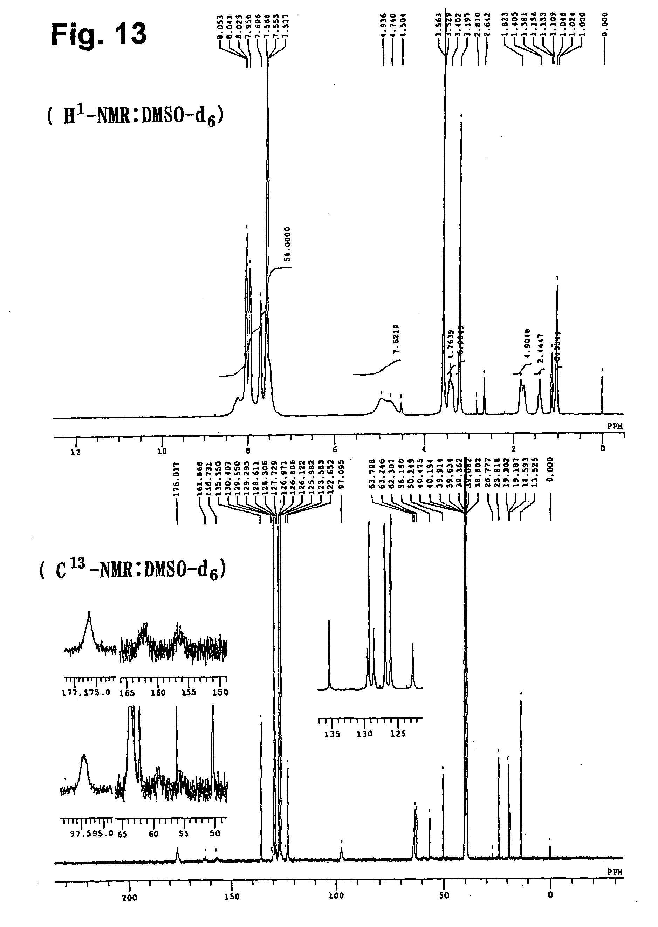

2.66g (0.010mol) of 4,4,4-trifluoro-1-(2-naphthyl)-1,3-butanedione that is available from Tokyo Kasei Kogyo Co., Ltd. was added to 100ml of ethanol, and mixed to solve. After 10.0ml of 1N sodium hydroxide which is the same equivalence to the 1,3-butanedione derivative was added thereto. Moreover 0.666g (0.00125mol) of the ammonium compound 5 obtained in Synthetic Example 10 and 0.915g (0.0025mol) of europium(III) chloride hexahydrate that is available from Wako Pure Chemical Industries, Ltd. were added thereto. It was stirred and heated at 60 degrees centigrade for about 5 hours. Obtained product was determined as the complex mixture including the luminous organic compound 6 and other impure complex by observation of NMR. 2.34g of the complex mixture was obtained at 69.7% of yield that was converted to an assumed value of the luminous organic compound 6 having 100% purity. The observed results of ¹H-NMR and ¹³C-NMR of the complex mixture were shown by Fig. 13.

### Comparative Manufacturing Example 7 (manufacture of the luminous organic compound 7 through one step)

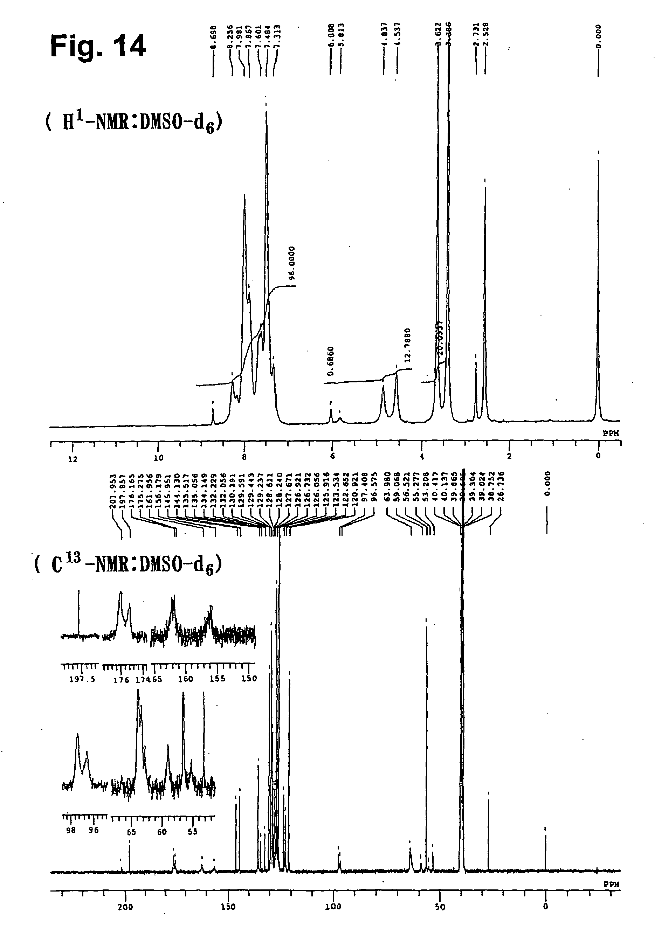

2.66g (0.010mol) of 4,4,4-trifluoro-1-(2-naphthyl)-1,3-butanedione that is available from Tokyo Kasei Kogyo Co., Ltd. was added to 100ml of ethanol, and mixed to solve. After 10.0ml of 1N sodium hydroxide which is the same equivalence to the 1,3-butanedione derivative was added thereto. Moreover 0.666g (0.000833mol) of the ammonium compound 6 obtained in Synthetic Example 11 and 0.915g (0.0025mol) of europium(III) chloride hexahydrate that is available from Wako Pure Chemical Industries, Ltd. were added thereto. It was stirred and heated at 60 degrees centigrade for about 5 hours. Obtained product was determined as the complex mixture including the luminous organic compound 7 and other impure complex by observation of NMR. 1.00g of the complex mixture was obtained at 29.5% of yield that was converted to an assumed value of the luminous organic compound 7 having 100% purity. The observed results of ¹H-NMR and ¹³C-NMR of the complex mixture were shown by Fig. 14.

### Comparative Manufacturing Example 8 (manufacture of the luminous organic compound 8 through one step)

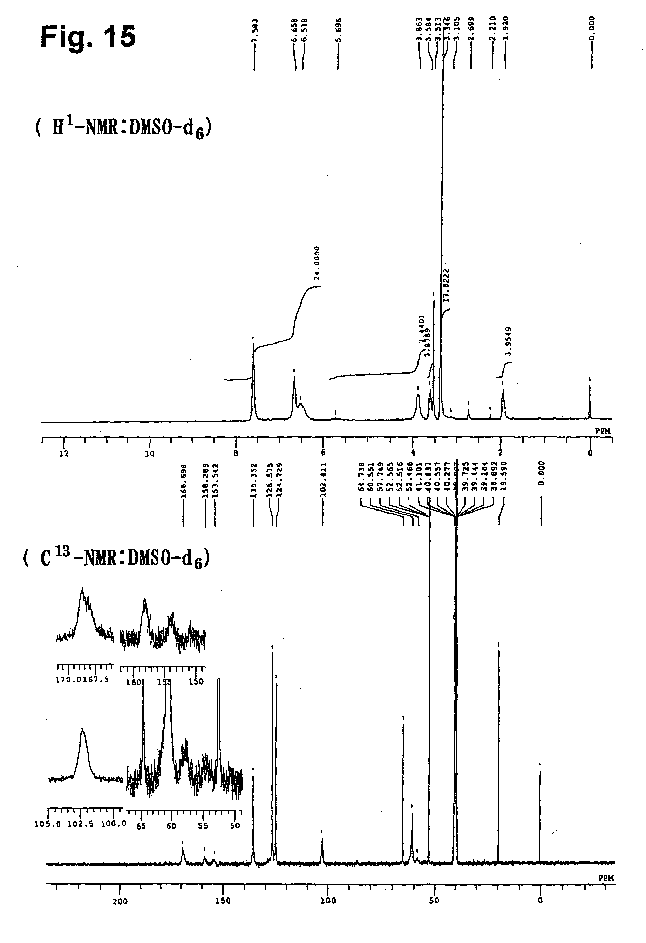

2.22g (0.010mol) of 4,4,4-trifluoro-1-(2-thienyl)-1,3-butanedione that is available from Tokyo Kasei Kogyo Co., Ltd. was added to 100ml of ethanol, and mixed to solve. After 10.0ml of 1N sodium hydroxide which is the same equivalence to the 1,3-butanedione derivative was added thereto. Moreover 0.535g (0.00125mol) of the ammonium compound 2 obtained in Synthetic Example 7 and 0.915g (0.0025mol) of europium(III) chloride hexahydrate that is available from Wako Pure Chemical Industries, Ltd. were added thereto. It was stirred and heated at 60 degrees centigrade for about 5 hours. Obtained product was determined as the complex mixture including the luminous organic compound 8 and other impure complex by observation of NMR. 1.34g of the complex mixture was obtained at 47.7% of yield that was converted to an assumed value of the luminous organic compound 8 having 100% purity. The observed results of ¹H-NMR and ¹³C-NMR of the complex mixture were shown by Fig. 15.

### Comparative Manufacturing Example 9 (manufacture of the luminous organic compound 9 through one step)

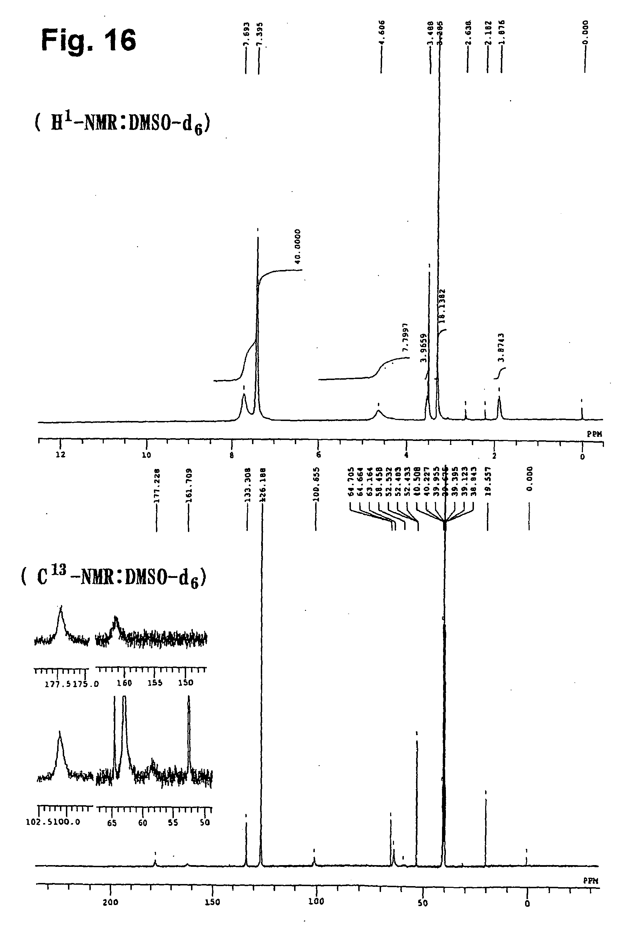

2.16g (0.010mol) of 4,4,4-trifluoro-1-pheny-1,3-butanedione that is available from Tokyo Kasei Kogyo Co., Ltd. was added to 100ml of ethanol, and mixed to solve. After 10.0ml of 1N sodium hydroxide which is the same equivalence to the 1,3-butanedione derivative was added thereto. Moreover 0.535g (0.00125mol) of the ammonium compound 2 obtained in Synthetic Example 7 and 0.915g (0.0025mol) of europium(III) chloride hexahydrate that is available from Wako Pure Chemical Industries, Ltd. were added thereto. It was stirred and heated at 60 degrees centigrade for about 5 hours. 1.68g of luminous organic compound 9 was obtained at 61.0% of yield. The observed results of ¹H-NMR and ¹³C-NMR thereof were shown by Fig. 16.

The results of the Comparative Manufacturing Examples 1 to 9 are summarized in Table 2.

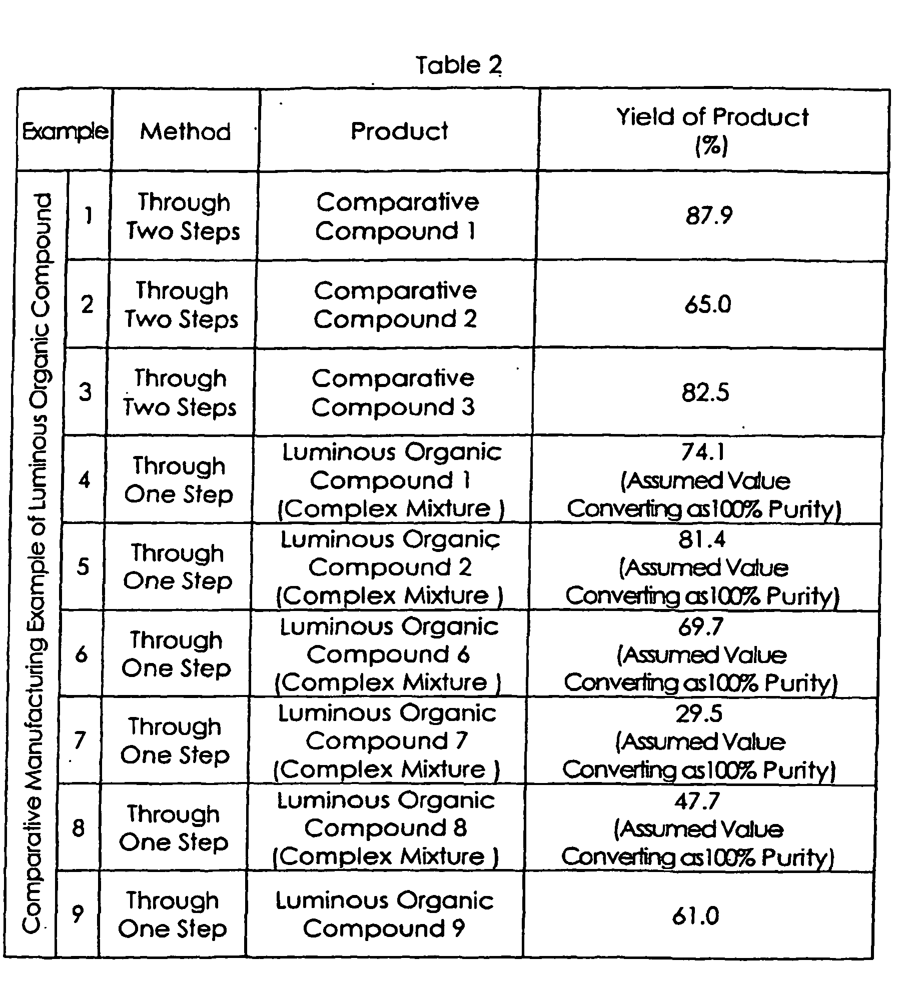

According to the Table 1, it is obvious that the desired luminous organic compounds are obtained at high yield by the manufacturing method thereof through two steps consisting of the first step and the second step such as Manufacturing Examples 1 to 11. The luminous organic compounds are found that the purity thereof is high, because the analytical results of atomic absorption spectrochemical analysis and elementary analysis are identical with theoretical values. Thus the manufacturing method of the luminous organic compound through two steps is advantageous to both the yield and the purity.

On the other hand, according to the Table 2, it is obvious that the desired luminous organic compounds are obtained with the impurities in low purity, or obtained without the impurities at low yield.

The observed results of NMR were investigated in detail. When Fig. 1 to 9 that are NMR spectra of the luminous organic compounds 1 to 9 manufactured by the Manufacturing Examples 1 to 9 and Fig. 11 to 16 that are NMR spectra of the luminous organic compounds 1, 2, 6, 7, 8 and 9 manufactured by the Comparative Manufacturing Examples 4 to 9 are compared and investigated, it is obvious as follows.

### Observed Result 1 of NMR

According to the Fig. 1 to 9 showing the NMR spectra of the luminous organic compounds 1 to 9 that were manufactured by the Manufacturing Examples 1 to 9, it is obvious that each compound is the complex coordinated equivalently 1,3-butanedione derivative to metal such as Eu: the rare earth metal, and is included no impurities.

### Observed Result 2 of NMR

Fig. 1 and Fig. 11 showing the NMR spectra of the luminous organic compound 1 that were respectively manufactured by the Manufacturing Example 1 and Comparative Manufacturing Example 4 are compared. In Fig. 11 of the luminous organic compound 1 manufactured by the Comparative Manufacturing Example 4, several peaks of carbonyl group are observed in comparison with Fig. 1. So it is obvious that the 1,3-butanedione derivative is not coordinated equivalently and perfectly to Eu: the rare earth metal, and the unreacted 1,3-butanedione derivative is included in the luminous organic compound.

### Observed Result 3 of NMR

Fig. 2 and Fig. 12 showing the NMR spectra of the luminous organic compound 2 that were respectively manufactured by the Manufacturing Example 2 and Comparative Manufacturing Example 5 are compared. In Fig. 12 of the luminous organic compound 2 manufactured by the Comparative Manufacturing Example 5, several peaks of carbonyl group are observed in comparison with Fig. 2. So it is obvious that the 1,3-butanedione derivative is not coordinated to Eu: the rare earth metal equivalently and perfectly in the luminous organic compound.

### Observed Result 4 of NMR

Fig. 6 and Fig. 13 showing the NMR spectra of the luminous organic compound 6 that were respectively manufactured by the Manufacturing Example 6 and Comparative Manufacturing Example 6 are compared. In Fig. 13 of the luminous organic compound 6 manufactured by the Comparative Manufacturing Example 6, several peaks of carbonyl group are observed in comparison with Fig. 6. So it is obvious that the 1,3-butanedione derivative is not coordinated to Eu: the rare earth metal equivalently and perfectly in the luminous organic compound.

### Observed Result 5 of NMR

Fig. 7 and Fig. 14 showing the NMR spectra of the luminous organic compound 7 that were respectively manufactured by the Manufacturing Example 7 and Comparative Manufacturing Example 7 are compared. In Fig. 14 of the luminous organic compound 7 manufactured by the Comparative Manufacturing Example 7, several peaks of carbonyl group are observed in comparison with Fig. 7. So it is obvious that the 1,3-butanedione derivative is coordinated equivalently to Eu: the rare earth metal imperfectly, and the unreacted 1,3-butanedione derivative is included in the luminous organic compound.

### Observed Result 6 of NMR

Fig. 8 and Fig. 15 showing the NMR spectra of the luminous organic compound 8 that were respectively manufactured by the Manufacturing Example 8 and Comparative Manufacturing Example 8 are compared. In Fig. 15 of the luminous organic compound 8 manufactured by the Comparative Manufacturing Example 8, several peaks of carbonyl group are observed in comparison with Fig. 8. So it is obvious that the 1,3-butanedione derivative is not coordinated to Eu: the rare earth metal equivalently and perfectly in the luminous organic compound.

### Observed Result 7 of NMR

Fig. 9 and Fig. 16 showing the NMR spectra of the luminous organic compound 9 that were respectively manufactured by the Manufacturing Example 9 and Comparative Manufacturing Example 9 are compared. It is obvious that the 1,3-butanedione derivatives are coordinated to rare earth metal equivalently in both luminous organic compounds.

According to thus observed results of NMR, it is obvious that the luminous organic compound was obtained at higher yield by the manufacturing method through two steps consisting of the first step and the second step than the method through one step.

Fluorescence intensity of each obtained compound was measured in order to evaluate fluorescence property.

A method of the evaluation is as follows. 25mg of each compound was dissolved in 100ml of ethanol respectively. The fluorescence intensity, photoluminescence intensity, was measured by a fluorescence spectrophotometer RF-5300PC that is available from Shimadzu Corporation. The measured results of the luminous organic compounds 1 to 9 and 11, the comparative compounds 1 to 3 and the metal complex intermediate 1 to 3 are indicated in Table 3. The relative value (1) of the fluorescence intensity indicates the value related to the fluorescence intensity of the comparative compound 3 regarded as 1.00. The relative value (2) of the fluorescence intensity indicates the value related to the fluorescence intensity of the metal complex intermediate 3 regarded as 1.00.

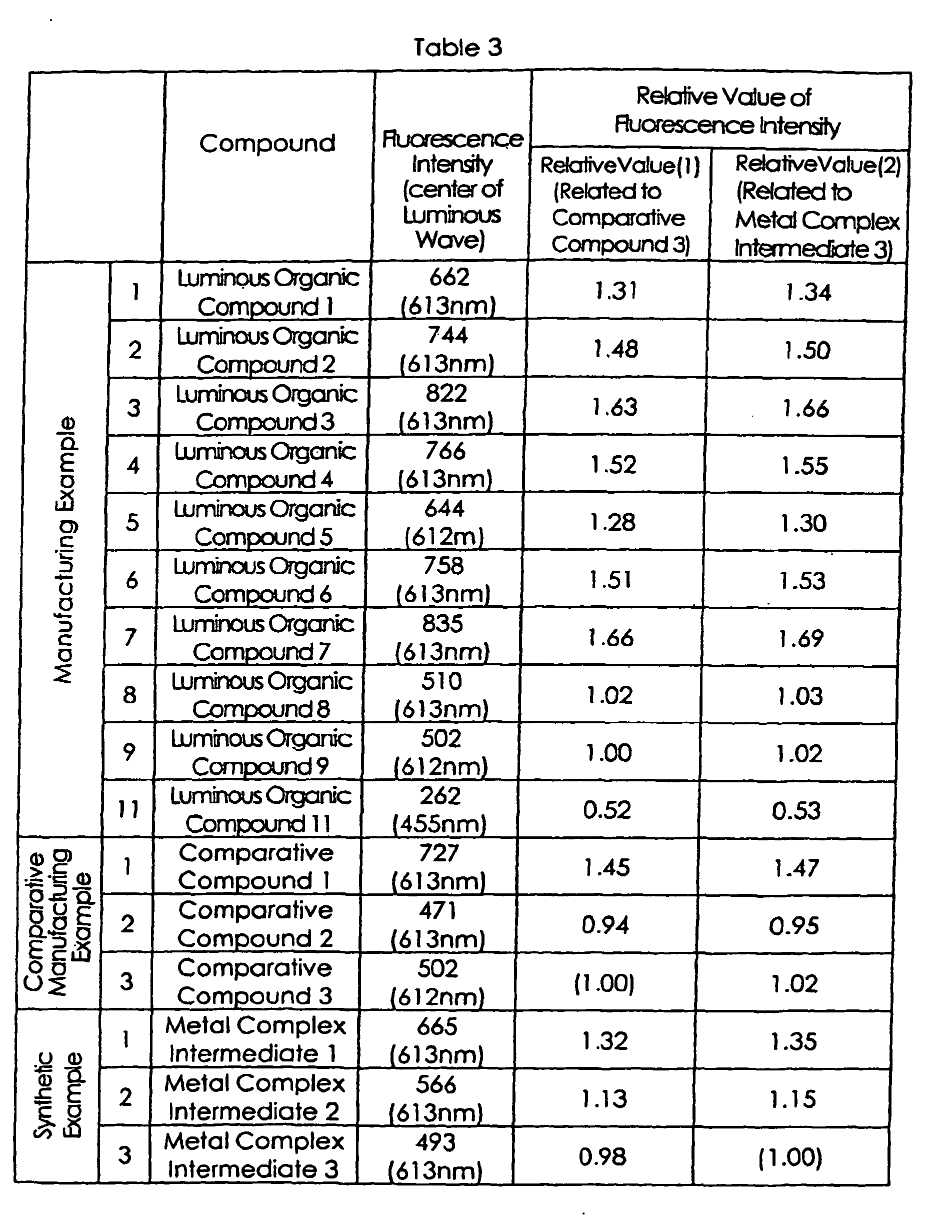

According to the Table 3, it is obvious that the luminous organic compounds 1 to 9 and 11 in the Manufacturing Examples have the sufficient fluorescence intensity, in comparison with the comparative compounds 1 to 3 that are the complex having sole ammonium counter ion, and the metal complex intermediates 1 to 3 having no counter ion.

The results of measurement of solubility of the luminous organic compounds 1 to 11 and the comparative compounds 1 to 3 to methyl ethyl ketone, ethyl acetate, ethanol, xylene and toluene are indicated in Table 4. A method of measurement of the solubility is as follows. After the prescribed amount of the compound was added to each solvent, it was heated by water bath and irradiated supersonic wave for 1 hour. It was stood at room temperature overnight, and filtrated. Obtained residue was dried. Amount of insoluble residue was weighed, and solubility (w/v%) was determined.

**Table 4**

| Compound | Solubility (w/v%) | | | | |
|---|---|---|---|---|---|
| | Methyl Ethyl Ketone | Ethyl Acetate | Ethanol | Xylene | Toluene |
| Luminous Organic Compound 1 | over10.0 | over10.0 | 0.20 | 0.10 | 0.52 |
| Luminous Organic Compound 2 | over10.0 | 1.54 | 0.19 | 0.10 | 0.24 |
| Luminous Organic Compound 3 | over10.0 | 9.01 | 0.14 | 0.18 | 0.31 |
| Luminous Organic Compound 4 | over10.0 | over10.0 | 0.08 | 0.22 | 0.23 |
| Luminous Organic Compound 5 | over10.0 | 3.46 | 0.37 | 0.52 | 0.30 |
| Luminous Organic Compound 6 | over10.0 | over10.0 | 0.14 | 3.22 | 3.86 |
| Luminous Organic Compound 7 | over 10.0 | 10.0 | 0.16 | 0.16 | 0.14 |
| Luminous Organic Compound 8 | over10.0 | 0.88 | 0.15 | 0.10 | 0.18 |
| Luminous Organic Compound 9 | over10.0 | 3.55 | 0.11 | 0.12 | 0.30 |
| Luminous Organic Compound 10 | over10.0 | 1.21 | 0.062 | 0.32 | 0.43 |
| Luminous Organic Compound 11 | over10.0 | 1.60 | 0.21 | 0.10 | 0.25 |
| Comparative 1 Compound 1 | over10.0 | over10.0 | 0.13 | 0.19 | 0.38 |
| Comparative Compound 2 | 9.91 | 9.90 | 0.31 | 0.09 | 0.21 |
| Comparative Compound 3 | over10.0 | 9.01 | 0.35 | 0.21 | 0.19 |

According to the Table 4, it is obvious that the luminous organic compounds 1 to 11 in the manufacturing examples have the sufficient solubility to ketone solvent or ethyl acetate used for oil ink or printing ink, in comparison with the comparative compounds 1 to 3. The solubility to xylene or toluene is improved because of having unsymmetrical quaternary ammonium groups of the counter ion as the spacer.

Next, the examples of preparing the ink composition using the luminous organic compounds in the manufacturing examples are explained by following Examples A to E.

### Example A (preparing of the ink composition A)

1g of the luminous organic compound 1 was dissolved in the mixed solvent of 90g of methyl ethyl ketone and 5g of ethyl acetate. 4g of polyvinylpyrrolidone: PVP K-15 that is available from IPS Corporation was added thereto, to prepare the ink composition A. Bar codes were printed by the ink composition A onto ordinary paper using an ink jet printer that is available from Seiko Epson Corporation. When the ultraviolet rays having about 365nm was irradiated by the black light lamp, it was luminous with vivid red.

### Example B (preparing of the ink composition B)

1g of the luminous organic compound 3 was dissolved in the mixed solvent of 90g of methyl ethyl ketone and 5g of ethyl acetate. 4g of polyvinyl butyral: S-LEC BL-1 that is available from Sekisui Chemical Co., Ltd. was added thereto, to prepare the ink composition B. Bar codes were printed by the ink composition B onto ordinary paper using an ink jet printer that is available from Seiko Epson Corporation. When the ultraviolet rays having about 365nm was irradiated by the black light lamp, it was luminous with vivid red.

### Example C (preparing of the ink composition C)

1g of the luminous organic compound 5 was dissolved in the mixed solvent of 90g of methyl ethyl ketone and 5g of ethyl acetate. 4g of polyacrylate resin: NeoCrylB-814 that is available from Avecia Corporation was added thereto, to prepare the ink composition C. Bar codes were printed by the ink composition C onto ordinary paper using an ink jet printer that is available from Seiko Epson Corporation. When the ultraviolet rays having about 365nm was irradiated by the black light lamp, it was luminous with vivid red.

### Example D (preparing of the ink composition D)

1g of the luminous organic compound 7 was dissolved in the mixed solvent of 80g of methyl ethyl ketone and 5g of ethyl acetate. 15g of 20% aqueous solution of polyallylamine having 10000 of weight-average molecular weight: PAA-L that is available from Nitto Boseki Co., Ltd. was added thereto, to prepare the ink composition D. Bar codes were printed by the ink composition D onto ordinary paper using an ink jet printer that is available from Seiko Epson Corporation. When the ultraviolet rays having about 365nm was irradiated by the black light lamp, it was intensely luminous with vivid red.

### Example E (preparing of the ink composition E)

1g of the luminous organic compound 11 was dissolved in the mixed solvent of 90g of methyl ethyl ketone and 5g of ethyl acetate. 4g of polyvinylpyrrolidone: PVP K-15 that is available from IPS Corporation was added thereto, to prepare the ink composition E. Bar codes were printed by the ink composition E onto ordinary paper using an ink jet printer that is available from Seiko Epson Corporation. When the ultraviolet rays having about 365nm was irradiated by the black light lamp, it was luminous with vivid blue.

Next, the example of preparing the multilayer organic electroluminescence elemental device using the luminous organic compound 4 in the Manufacturing Example 4 and triarylamine dimmer (TPD) as hole transport material (HTM) are explained by following Example F.

### Example F (producing of the organic electroluminescence elemental device)

The substrate as the transparent electrode made from Indium tin oxide (ITO) having thickness of 100nm on glass was enough washed with isopropyl alcohol. On the substrate, Triphenylamine dimmer for instance synthesized in accordance with Japanese Provisional Publication No. 2000-256276 was formed as the hole injection transport layer having thickness of 80nm, and the luminous organic compound 4 was formed as the luminous layer having thickness of 80nm, and the layers were formed by vacuum deposition in turn. Moreover the alloy of mixed Mg/Ag whose ratio is 10 to 1 was formed as the electrode having thickness of 150nm as the negative electrode, on the substrate, to produce the organic electroluminescence elemental device.

When 15V of the direct current voltage was impressed, the red uminescence having high brightness was observed.

## Claims

1. A manufacturing method of a luminous organic compound represented by following formula (1) 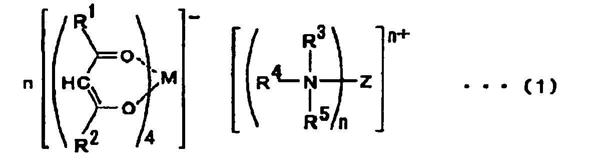 in the formula (1),
n is 2 or more numbers;
R¹- is an aryl group selected from 2-naphthyl group and phenyl group; a heterocyclic group selected from 2-thienyl group, 2-furanyl group and 3-pyridyl group; benzyl group; trifluoromethyl group; or straight or branched alkyl group having 1 to 12 carbons, and those groups are to have substitutional groups;
R²- is a fluorine-contained alkyl group having 1 to 20 carbon atoms selected from perfluoroalkyl and partial-fluoroalkyl group.
M is trivalent metal selected from europium, terbium, neodymium, aluminium, gallium, indium, thallium, scandium, and yttrium,
R³-, R⁴- and R⁵- are the same or different to each other, and one thereof is selected from the group consisting of an alkyl group, an aralkyl group and an aryl group which are to have substitutional groups;
-Z is a covalent bonding group being n-valent,
comprising a first step for reacting 1,3-butanedione derivative represented by following formula (2) 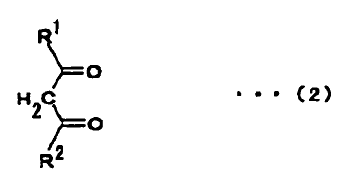 in the formula (2), R¹- and R²- are the same above, and a metallic compound having trivalent metal M, to prepare a metal complex intermediate represented by following formula (3) 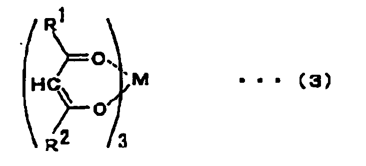 in the formula (3), R¹-, R²- and M are the same above,
a second step for reacting the metal complex intermediate, the same or another 1,3-butanedione derivative represented by the formula (2) and a quaternary ammonium compound having plural ammonium groups represented by following formula (4) 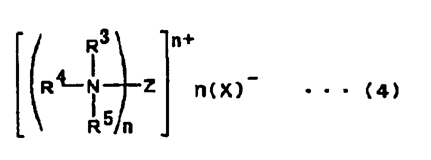 in the formula (1), R³-, R⁴-, R⁵-, -Z and n are the same above, (X)- is a counter ion.

2. The manufacturing method of the luminous organic compound according to claim 1,
wherein said R¹ of the formulas (1), (2) and (3) is 2-naphthyl group,
phenyl group, 2-thienyl group, 2-furanyl group or 3-pyridyl group.

3. The manufacturing method of the luminous organic compound according to claim 1,
wherein said R² of the formulas (1), (2) and (3) is selected from CF₃-group, C₂F₅- group, n-C₃F₇- group, n-C₇F₁₅- group, CHF₂- group, CH₂F-group and CH(CF₃)₂- group.

4. The manufacturing method of the luminous organic compound according to claim 3,
wherein said R²- of the formula (1), (2) and (3) is CF₃- group.

5. The manufacturing method of the luminous organic compound according to claim 1,
wherein said M of the formulas (1) and (3) is europium, terbium or aluminum.

6. The manufacturing method of the luminous organic compound according to claim 1,
wherein said -Z of the formulas (1) and (4) is the covalent bonding group being divalent, trivalent or tetravalent.

7. The manufacturing method of the luminous organic compound according to claim 6,
wherein said -Z of the formulas (1) and (4) is the covalent bonding group having at least one selected from the group consisting of on alkylene
group, an alkenylene group, an alkynylene group, an arylene group, a heteroarylene group and a silicon-contained group, and being to have substitutional groups.

## Patentansprüche

1. Herstellungsverfahren für eine lumineszierende organische Verbindung der folgenden Formel (1) 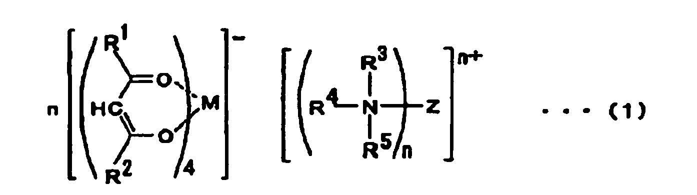 wobei in der Formel (1)
n für Zahlen von 2 oder mehr steht;
R¹- für eine Arylgruppe, die aus einer 2-Naphthylgruppe und einer Phenylgruppe ausgewählt ist; eine heterocyclische Gruppe, die aus einer 2-Thienylgruppe, 2-Furanylgruppe und 3-Pyridylgruppe ausgewählt ist; eine Benzylgruppe; eine Trifluormethylgruppe; oder eine gerade oder verzweigte Alkylgruppe mit 1 bis 12 Kohlenstoffen steht und diese Gruppen Substitutionsgruppen aufweisen müssen;
R²- für eine Fluor enthaltende Alkylgruppe mit 1 bis 20 Kohlenstoffatomen steht, die aus einer Perfluoralkyl- und einer partiellen Fluoralkylgruppe ausgewählt ist;
M für ein dreiwertiges Metall steht, das aus Europium, Terbium, Neodym, Aluminium, Gallium, Indium, Thallium, Scandium und Yttrium ausgewählt ist;
die Reste R³-, R⁴- und R⁵- einander gleich oder voneinander verschieden sind und ein Rest hiervon aus der Gruppe von einer Alkylgruppe, einer Aralkylgruppe und einer Arylgruppe, die Substitutionsgruppen aufweisen müssen, ausgewählt ist;
-Z für eine Gruppe mit kovalenter Bindung, die n-wertig ist bzw. n-fach gebunden ist, steht;
wobei das Herstellungsverfahren eine erste Stufe zur Umsetzung eines 1,3-Butandionderivats der folgenden Formel (2) 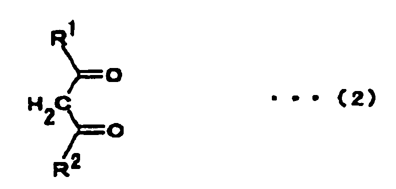 wobei in der Formel (2) R¹- und R²- die im Vorhergehenden angegebene Bedeutung aufweisen, und einer Metallverbindung mit einem dreiwertigen Metall M zur Herstellung eines Metallkomplex-Zwischenprodukts der folgenden Formel (3) 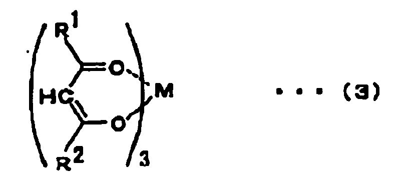 wobei in der Formel (3) R¹-, R²- und M die im Vorhergehenden angegebene Bedeutung aufweisen,
und eine zweite Stufe zur Umsetzung des Metallkomplex-Zwischenprodukts, des gleichen oder eines anderen 1,3-Butandionderivats der Formel (2) und einer quaternären Ammoniumverbindung mit mehreren Ammoniumgruppen der folgenden Formel (4) 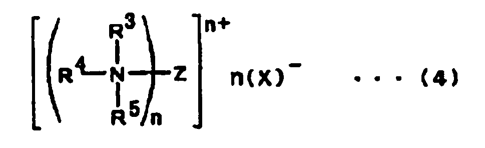 wobei in der Formel (4) R³-, R⁴-F, R⁵-, -Z und n die im Vorhergehenden angegebene Bedeutung aufweisen, (X)⁻ für ein Gegenion steht, umfasst.

2. Herstellungsverfahren für die lumineszierende organische Verbindung nach Anspruch 1,
wobei R¹ der Formeln (1), (2) und (3) für eine 2-Naphthylgruppe, eine Phenylgruppe, eine 2-Thienylgruppe, eine 2-Furanylgruppe oder eine 3-Pyridylgruppe steht.

3. Herstellungsverfahren für die lumineszierende organische Verbindung nach Anspruch 1,
wobei R² der Formeln (1), (2) und (3) aus einer CF₃-Gruppe, C₂F₅-Gruppe, n-C₃F₇-Gruppe, n-C₇F₁₅-Gruppe, CHF₂-Gruppe, CH₂F-Gruppe und CH(CF₃)₂-Gruppe ausgewählt ist.

4. Herstellungsverfahren für die lumineszierende organische Verbindung nach Anspruch 3,
wobei R²- der Formeln (1), (2) und (3) für die CF₃-Gruppe steht.

5. Herstellungsverfahren für die lumineszierende organische Verbindung nach Anspruch 1,
wobei M der Formeln (1) und (3) für Europium, Terbium oder Aluminium steht.

6. Herstellungsverfahren für die lumineszierende organische Verbindung nach Anspruch 1,
wobei -Z der Formeln (1) und (4) für eine Gruppe mit kovalenter Bindung, die zweiwertig, dreiwertig oder vierwertig ist bzw. zweifach, dreifach oder vierfach gebunden ist, steht.

7. Herstellungsverfahren für die lumineszierende organische Verbindung nach Anspruch 6,
wobei -Z der Formeln (1) und (4) für eine Gruppe mit kovalenter Bindung steht, die mindestens eine Gruppe, die aus der Gruppe von einer Alkylengruppe, einer Alkenylengruppe, einer Alkinylengruppe, einer Arylengruppe, einer Heteroarylengruppe und einer Silicium enthaltenden Gruppe ausgewählt ist, aufweist und Substitutionsgruppen aufweisen muss.

## Revendications

1. Procédé de fabrication d'un composé organique lumineux représenté par la formule (1) suivante 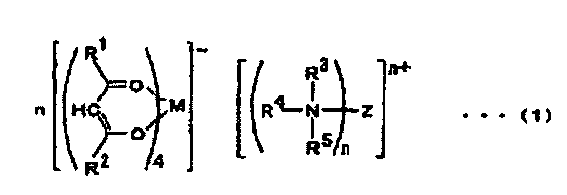 dans la formule (1),
n vaut 2 ou plus;
R¹- est un groupe aryle choisi parmi le groupe 2-naphtyle et le groupe phényle ; un groupe hétérocyclique choisi parmi le groupe 2-thiényle, le groupe 2-furanyle et le groupe 3-pyridyle ; le groupe benzyle ; le groupe trifluorométhyle ; ou un groupe alkyle linéaire ou ramifié ayant de 1 à 12 atomes de carbone, et ces groupes peuvent comporter des groupes de substitution ;
R²- est un groupe alkyle contenant du fluor ayant de 1 à 20 atomes de carbone et choisi parmi un groupe perfluoroalkyle et un groupe fluoroalkyle partiel,
M est un métal trivalent choisi parmi l'europium, le terbium, le néodyme, l'aluminium, le gallium, l'indium, le thallium, le scandium et l'yttrium,
R³-, R⁴- et R⁵- sont identiques ou différents les uns des autres, et l'un d'entre eux est choisi dans le groupe consistant en un groupe alkyle, un groupe aralkyle et un groupe aryle qui peuvent comporter des groupes de substitution ;
-Z est un groupe de liaison covalente qui est n-valent ;
comprenant une première étape de réaction d'un dérivé de 1,3-butanedione représenté par la formule (2) suivante 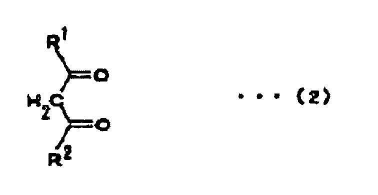 dans la formule (2), R¹- et R²- sont comme ci-dessus, et un composé métallique comportant un métal trivalent M, pour préparer un intermédiaire complexe de métal représenté par la formule (3) suivante 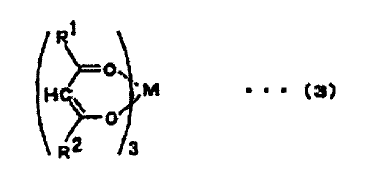 dans la formule (3), R¹-, R²- et M sont comme ci-dessus,
une seconde étape de réaction de l'intermédiaire complexe de métal, du même dérivé de 1,3-butanedione ou d'un autre représenté par la formule (2) et d'un composé ammonium quaternaire ayant plusieurs groupes ammonium représenté par la formule (4) suivante 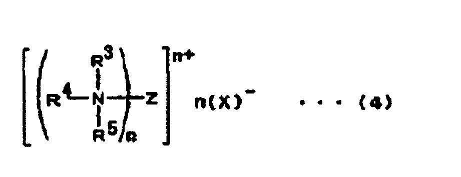 dans la formule (4), R³-, R⁴-, R⁵⁻, -Z et n sont comme ci-dessus, (X)⁻ est un contre-ion.

2. Procédé de fabrication du composé organique lumineux selon la revendication 1,
dans lequel ledit R¹ des formules (1), (2) et (3) est un groupe 2-naphtyle, un groupe phényle, un groupe 2-thiényle, un groupe 2-furanyle ou un groupe 3-pyridyle.

3. Procédé de fabrication du composé organique lumineux selon la revendication 1,
dans lequel ledit R² des formules (1), (2) et (3) est choisi parmi un groupe CF₃-, un groupe C₂F₅-, un groupe n-C₃F₇-, un groupe n-C₇F₁₅-, un groupe CHF₂-, un groupe CH₂F- et un groupe CH(CF₃)₂-.

4. Procédé de fabrication du composé organique lumineux selon la revendication 3,
dans lequel ledit R²- des formules (1), (2) et (3) est un groupes CF₃-.

5. Procédé de fabrication du composé organique lumineux selon la revendication 1,
dans lequel ledit M des formules (1) et (3) est l'europium, le terbium ou l'aluminium.

6. Procédé de fabrication du composé organique lumineux selon la revendication 1,
dans lequel ledit -Z des formules (1) et (4) est le groupe de liaison covalente qui est divalent, trivalent ou tétravalent.

7. Procédé de fabrication du composé organique lumineux selon la revendication 6,
dans lequel ledit -Z des formules (1) et (4) est le groupe de liaison covalente ayant au moins un groupe choisi dans le groupe consistant en un groupe alkylène, un groupe alcénylène, un groupe alcynylène, un groupe arylène, un groupe hétéroarylène et un groupe contenant du silicium, et pouvant comporter des groupes de substitution.
